# EUROPÄISCHE PATENTSCHRIFT

(11) **EP 2 684 235 B1**
(45) Veröffentlichungstag und Bekanntmachung des Hinweises auf die Patenterteilung: **12.07.2017**
(21) Anmeldenummer: 12705984.8
(22) Anmeldetag: 23.02.2012
(51) Int. Cl.: H01M 2/10, H01M 10/613, H01G 4/224, H01M 10/6554, H01M 10/625, H01M 10/647, H01M 10/0525

(54) **ENERGIESPEICHERVORRICHTUNG**
ENERGY STORAGE DEVICE
DISPOSITIF D'ACCUMULATION D'ÉNERGIE

(30) Priorität: 11.03.2011 DE 102011013618
(43) Veröffentlichungstag der Anmeldung: 15.01.2014
(73) Patentinhaber: Li-Tec Battery GmbH, 01917 Kamenz (DE)
(72) Erfinder: SCHÄFER, Tim, 99768 Harztor (DE); MEINTSCHEL, Jens, 02994 Bernsdorf (DE)
(74) Vertreter: Moore, Derek
(86) Internationale Anmeldenummer: PCT/EP2012/000783
(87) Internationale Veröffentlichungsnummer: WO 2012/123065

(56) Entgegenhaltungen:
- WO-A1-2010/069713
- DE-A1-102008 059 966
- JP-A- H08 321 329
- US-A- 5 567 542
- US-A1- 2005 058 892

## Beschreibung

Die Erfindung betrifft eine Energiespeichervorrichtung mit mehreren Speicherzellen, einer Spanneinrichtung zum Verspannen der Speicherzellen und einer Temperiereinrichtung zum Temperieren der Speicherzellen bzw. eines aus den Speicherzellen gebildeten Zellverbundes.

Es ist bekannt, dass eine Batterie zur Anwendung in Kraftfahrzeugen, insbesondere in Kraftfahrzeugen mit einem Hybridantrieb oder in Elektrofahrzeugen, mehrere elektrisch in Reihe und/oder parallel geschaltete Zellen, beispielsweise Lithium-Ionen-Zellen, aufweist. Die deutsche Offenlegungsschrift DE 10 2008 059 966 A1 offenbart eine Batterie mit mehreren einen Zellenverbund bildenden Batteriezellen, einer Kühlvorrichtung zur Temperierung der Batteriezellen und elektrischen Bauelementen zur Überwachung und Steuerung von Batteriefunktionen. Die Kühlvorrichtung umfasst eine am Zellenverbund angeordnete Kühlplatte. Am Zellenverbund ist eine Andruckplatte zum Andrücken der Batteriezellen an die Kühlplatte angeordnet, wobei die Andruckplatte wenigstens eines der elektrischen Bauelemente aufweist. Der Zellenverbund und die Kühlplatte werden durch um sie herum geführte Spannelemente aneinander gepresst, wobei die Spannelemente elastische Mittel enthalten.

Die Zellen müssen oft gekühlt werden, um die entstehende Verlustwärme abzuführen. Dazu ist es bekannt, eine indirekte Kühlung durch einen Kühlmittelkreislauf oder eine direkte Kühlung mittels vorgekühlter Luft, die zwischen die Zellen geleitet wird, einzusetzen. Bei einer Kühlung durch den Kühlmittelkreislauf kann am Zellenblock der Batterie eine von Kühlmittel durchströmte metallische Kühlplatte angeordnet sein, oft unterhalb der Zellen. Von den Zellen zur Kühlplatte wird die Verlustwärme beispielsweise entweder über separate Wärmeleitelemente, z. B. Wärmeleitstäbe oder -bleche, oder über entsprechend aufgedickte Zellgehäusewände der Zellen geleitet. Häufig sind die Zellgehäuse der Zellen metallisch ausgeführt und es liegt an ihnen eine elektrische Spannung an. Zur Verhinderung von Kurzschlüssen wird die Kühlplatte von den Zellgehäusen dann durch eine elektrische Isolation, beispielsweise eine Wärmeleitfolie, einen Formkörper, eine Vergussmasse oder eine auf die Kühlplatte aufgebrachte Beschichtung oder Folie, getrennt. Der Kühlmittelkreislauf kann auch zur Erwärmung der Batterie z. B. beim Kaltstart verwendet werden.

Es sind bereits verschiedene derartige Batterien bekannt. Beispielsweise sind aus DE 10 2008 059 966 A1 und DE 10 2008 010 828 A1 Batterien bekannt, deren Zellen als so genannte Flachzellen ausgebildet sind, die im Wesentlichen quaderförmig ausgebildet und stapelartig hintereinander auf einer Kühlplatte angeordnet sind. Die Zellen werden dabei durch eine Spanneinrichtung, beispielsweise durch eine separate Spannplatte und/oder durch Spannbänder, miteinander verspannt und an die Kühlplatte gepresst.

Aus WO 2010/081704 A2 ist eine Batterie bekannt, bei welcher mit Hilfe zweier Druckrahmen und einiger Zuganker mehrere Zellen in Coffeebag-Bauweise zwischen Rahmenelementen verspannt sind. Aus der gleichen Druckschrift ist es bekannt, zwischen aufeinanderfolgenden Zellen in einem Batterieblock nachgiebige Elemente vorzusehen.

Es ist eine Aufgabe der vorliegenden Erfindung, den Aufbau nach dem Stand der Technik zu verbessern.

Die Aufgabe wird durch die Merkmale des unabhängigen Anspruchs gelöst. Vorteilhafte Weiterbildungen der Erfindung bilden den Gegenstand der Unteransprüche.

Nach einem Gesichtspunkt der vorliegenden Erfindung wird eine Energiespeichervorrichtung vorgeschlagen, welche eine Mehrzahl von Speicherzellen, eine Spanneinrichtung zum Verspannen der Speicherzellen, und eine Kühleinrichtung zum Temperieren der Speicherzellen oder eines durch die Speicherzellen gebildeten Zellverbundes aufweist, wobei die Spanneinrichtung als funktionaler Bestandteil der Temperiereinrichtung ausgelegt und eingerichtet ist.

Als eine Energiespeichervorrichtung wird im Sinne der Erfindung eine Einrichtung verstanden, die auch in der Lage ist, insbesondere elektrische Energie aufzunehmen, zu speichern und wieder abzugeben, gegebenenfalls unter Ausnutzung elektrochemischer Prozesse. Als eine Speicherzelle wird im Sinne der Erfindung eine in sich abgeschlossene Funktionseinheit der Energiespeichervorrichtung verstanden, die für sich genommen auch in der Lage ist, insbesondere elektrische Energie aufzunehmen, zu speichern und wieder abzugeben, gegebenenfalls unter Ausnutzung elektrochemischer Prozesse. Eine Speicherzelle kann beispielsweise, aber nicht nur, eine galvanische Primär- oder Sekundärzelle (im Rahmen dieser Anmeldung werden Primär- oder Sekundärzellen unterschiedslos als Batteriezellen und eine daraus aufgebaute Energiespeichervorrichtung als Batterie bezeichnet), eine Brennstoffzelle, ein Hochleistungskondensator wie etwa Supercap oder dergleichen, oder eine Energiespeicherzelle anderer Art sein. Insbesondere weist eine als Batteriezelle aufgebaute Speicherzelle beispielsweise einen aktiven Bereich oder aktiven Teil, in welchem elektrochemische Umwandlungs- und Speicherungsprozesse stattfinden, eine Einhausung zur Kapselung des aktiven Teils von der Umgebung und wenigstens zwei Stromableiter, die als elektrische Pole der Speicherzelle dienen, auf. Der aktive Teil weist beispielsweise eine Elektrodenanordnung auf, die vorzugsweise als Stapel oder Wickel mit Stromsammelfolien, aktiven Schichten und Separatorschichten ausgebildet ist, auf. Die aktiven und Separatorschichten können wenigstens teilweise als eigenständige Folienzuschnitte oder als Beschichtungen der Stromsammelfolien vorgesehen sein. Die Stromableiter sind mit den Stromsammelfolien elektrisch verbunden oder durch diese gebildet.

Eine Speicherzelle kann auch eine Zelle sein, welche Energie nicht als elektrische, sondern als thermische, potentielle, kinetische oder sonstige Energieart aufnimmt und/oder abgibt oder eine Zelle welche Energie in einer Energieart aufnimmt und in einer anderen Energieart wieder abgibt, wobei die Speicherung in einer noch anderen Energieart erfolgen kann.

Unter einem Verspannen wird im Sinne der Erfindung ein Festhalten in einer vorbestimmten Lage, insbesondere Relativlage zueinander, durch Spannkräfte verstanden. Bei einem Verspannen können auch, aber nicht nur, elastische und Reibkräfte ausgenutzt werden. Das Verspannen schließt im Übrigen eine formschlüssige Lagefestlegung nicht aus; es kann, muss aber nicht, sich auf eine Verhinderung eines Auseinanderfallens beschränken.

Unter einem Temperieren wird im Sinne der Erfindung eine Ab- oder Zufuhr, insbesondere Abfuhr, von Wärme verstanden. Es kann als eine passive Kühlung, etwa durch Wärmeabstrahlung an Wärmeabstrahlflächen, als eine aktive Kühlung, etwa durch erzwungene Konvektion an Wärmeaaustauschflächen oder durch Wärmeaustausch mit einem insbesondere zirkulierenden Wärmeträger wie etwa Wasser, Öl oder dergleichen in einem Wärmetauscher verwirklicht sein. Dabei kann eine Steuerung bzw. Regelung vorgesehen sein, um einen vorbestimmten zulässigen Temperaturbereich einzuhalten.

Wenn die Spanneinrichtung als funktionaler Bestandteil der Temperiereinrichtung ausgelegt und eingerichtet ist, kann die Spanneinrichtung auch Funktionen erfüllen, die mit der Temperierung der Speicherzellen bzw. des Zellverbundes zusammenhängen. Diese Funktionen können beispielsweise, aber nicht nur, die Wärmeübertragung von und zu den Speicherzellen, die Wärmeabgabe über Wärmeabstrahlflächen, die Wärmeübertragung von und zu einem Wärmeträger, die Wärmeleitung von und zu einer Wärmequelle oder Wärmesenke und/oder dergleichen umfassen.

Hierzu ist die Spanneinrichtung mit einem wärmeleitenden Material ausgebildet. Als wärmeleitend wird im Sinne der Erfindung ein Material dann verstanden, wenn es eine Wärmeleitfähigkeit aufweist, die einen Einsatz als Wärmeleiter im technischen Sinn erlaubt. Eine Untergrenze kann im Bereich von etwa 10 bis 20 W m⁻¹ K⁻¹ angenommen werden; das entspricht der Wärmeleitfähigkeit von hochlegiertem Stahl und einigen mit gut wärmeleitenden Füllmaterialien versehenen (vorzugsweise faserverstärkten) Kunststoffen. Bevorzugt ist es, die Wärmeleitfähigkeit im Bereich von wenigstens 40 bis 50 W m⁻¹ K⁻¹ auszuwählen, was derjenigen von Federstahl (z.B. 55Cr3) entspricht. Besonders bevorzugt ist eine Wärmeleitfähigkeit von wenigstens 100 oder einigen 100 W m⁻¹ K⁻¹. Beispielsweise, aber nicht nur, kann etwa Silizium mit 148 W m⁻¹ K⁻¹ oder Aluminium mit 221 bis 237 W m⁻¹ K⁻¹ oder Kupfer mit 240 bis 400 W m⁻¹ K⁻¹ oder Silber mit etwa 430 W m⁻¹ K⁻¹ als geeignet gelten. Kohlenstoffnanoröhrchen, deren Wärmeleitfähigkeit mit etwa 6000 W m⁻¹ K⁻¹ angegeben wird, sollten hinsichtlich dieses Gesichtspunkts das derzeit erreichbare Optimum darstellen; ihr Einsatz oder der anderer Spezialwerkstoffen ist im Hinblick auf die Kosten, die Verarbeitbarkeit und sonstige technische Eignung abzuwägen. Vor diesem Hintergrund ist eine Ausbildung mit einem wärmeleitenden Material im Sinne der Erfindung so zu verstehen, dass die Spanneinrichtung oder ein Element der Spanneinrichtung entweder im Wesentlichen aus diesem Material bestehen oder aber, etwa aus Gründen der Festigkeit, der elektrischen Isolation, der Temperaturbeständigkeit oder sonstiger Eigenschaften oder Einsatzzwecke, nur einen Kern, eine Beschichtung oder Schicht, einen Mantel oder dergleichen aus einem solchen Material aufweisen kann. Durch geeignete Materialkombination können so die gewünschten Eigenschaften eingestellt werden. Die gleichen Materialien wie die oben genannten, oder auch andere gute Wärmeleiter wie etwa Keramiken oder Diamant, kommen auch als Füllmaterialien für wärmeleitende Kunststoffe in Betracht. (Alle Angaben zur Wärmeleitfähigkeit bei 20 °C nach Hütte, Die Grundlagen der Ingenieurwissenschaften, Springer-Verlag, 31. Auflage 2000, Engelkraut et al., Wärmeleitfähige Kunststoffe für Entwärmungsaufgaben, Fraunhofer Institut für Integrierte System und Bauelementetechnologie, Stand 15.07.2008, Deutsche Edelstahlwerke, Datenblatt 1.7176, und Wikipedia, Artikel zu "Wärmeleitfähigkeit", Stand 22.02.2011; Rundungen und Bereichszusammenfassungen ggf. diesseits.)

Weiter bevorzugt ist die Energiespeichervorrichtung derart ausgestaltet, dass die Spanneinrichtung wenigstens abschnittweise, vorzugsweise flächig, an Wärmeaustauschflächen der Speicherzellen anliegt. Als eine Wärmeaustauschfläche einer Speicherzelle kann im Sinne der Erfindung eine Fläche der Speicherzelle verstanden werden, die im Inneren der Speicherzelle erzeugte Wärme abgeben kann und ggf. (d.i., im kalten Zustand) auch Wärme zur Abgabe an ein Inneres der Speicherzelle aufnehmen kann. Es ist vorteilhaft, wenn das Bauelement, welchem die Wärmeaustauschfläche angehört, zur Weiterleitung einer in einem aktiven Bereich der Zelle erzeugten Wärme an die Wärmeaustauschfläche ausgelegt und eingerichtet ist. Durch das Anliegen ist eine gute thermische Kopplung gewährleistet. Die thermische Kopplung kann ggf. durch Vermittlung eines Wärmeleitelements geschehen, das auch Aufgaben der elektrischen Isolierung oder dergleichen erfüllen kann, geschehen.

Besonders bevorzugt ist die Energiespeichervorrichtung derart ausgestaltet, dass die Speicherzellen eine prismatische, insbesondere flache Form aufweisen und Wärmeaustauschflächen an wenigstens einer von Umfangsseiten, insbesondere Schmalseiten, der Speicherzellen vorgesehen sind. Unter einer flachen prismatischen Form wird im Sinne der Erfindung eine Form verstanden, deren Ausdehnung in einer Raumrichtung, die auch als Dickenrichtung definiert ist, deutlich geringer als in anderen Raumrichtungen ist und so zwei Flachseiten mit verhältnismäßig großer Flächenausdehnung von einem schmalen Rand, insbesondere wenigstens vier Umfangs- oder Schmalseiten, deutlich unterscheidbar sind. Flache, prismatische Speicherzellen sind besonders gut zu einem Zellverbund, insbesondere einem kompakten Block stapelbar, sie weisen eine gute Raumausnutzung auf und ihre Kontaktierung kann auf vielfältige Weise, etwa über die Flachseiten, über die Schmalseiten, über abragende Leiterstreifen (auch als Stromableiter bezeichnet) oder dergleichen verwirklicht werden. Bei gestapelten prismatischen Zellen liegen die Umfangsseiten außen, sodass sie sich als Wärmeaustauschflächen eignen. Es ist festzuhalten, dass die Erfindung gleichwohl auch auf nicht ausgeprägt flache, sondern beispielsweise, aber nicht nur, kubische Speicherzellen, ebenso auf nicht prismatische, sondern beispielsweise, aber nicht nur, zylindrische Speicherzellen anwendbar ist.

Weiter ist die Energiespeichervorrichtung vorzugsweise derart ausgestaltet, dass Wärmeleitelemente vorgesehen sind, die mit einem wärmeleitenden Material ausgebildet und wenigstens abschnittweise, vorzugsweise flächig, an Wärmeaustauschflächen der Speicherzellen anliegen, wobei die Spanneinrichtung wenigstens an freien Flächen der Wärmeleitelemente anliegt. Als ein Wärmeleitelement wird im Sinne der Erfindung ein Bauelement verstanden, welches auch in der Lage ist, Wärme von und zu Speicherzellen, insbesondere von und zu einem Raum zwischen Speicherzellen innerhalb der Energiespeichervorrichtung, nach und von außerhalb des Raums zwischen den Speicherzellen zu leiten. Ein Wärmeleitelement kann beispielsweise, aber nicht nur, ein Blech oder ein Formkörper aus einem wärmeleitenden Material sein, das zwischen den Speicherzellen angeordnet ist. Dabei wird als eine freie Fläche eines Wärmeleitelements im Sinne der Erfindung eine Fläche verstanden, welche von außerhalb des Zellverbunds der Speicherzellen aus zugänglich ist, z. B. an deren freien Randseiten übersteht und dort beispielsweise, aber nicht notwendigerweise, rechtwinklig gebogen ist, um an den Randseiten der Speicherzellen anzuliegen. Auch hier ist bevorzugt, wenn die Speicherzellen eine prismatische, insbesondere flache Form aufweisen; dann können die Wärmeaustauschflächen vorzugsweise an Flachseiten der Speicherzellen vorgesehen sein, und können die freien Flächen der Wärmeleitelemente vorzugsweise im Bereich von Umfangsseiten, insbesondere Schmalseiten der Speicherzellen vorgesehen sein. Wenn die Flachseiten der Speicherzellen als elektrische Pole der Speicherzellen ausgebildet sind, können die Wärmeleitelemente auch mit elektrisch leitenden Materialien ausgebildet sein und zusätzlich als elektrische Kontaktelemente zwischen benachbarten Speicherzellen oder zwischen einer Speicherzelle und einer Polanschlusseinrichtung der Energiespeichervorrichtung fungieren. Ein Wärmeleitelement kann alternativ elektrisch isolierende Eigenschaft aufweisen, wenn eine elektrische Kontaktierung gerade verhindert werden soll. Erfindungsgemäß ist zwischen zwei Speicherzellen und/oder zwischen einer Speicherzellen und einem anderen Bauelement wenigstens ein wenigstens teilweise nachgiebig, insbesondere elastisch nachgiebig, ausgebildetes Dämpfungselement vorgesehen, welches wärmeleitend ausgebildet ist. Bevorzugt ist das Dämpfungselement Teil einer Speicherzelle oder Teil eines Wärmeleitelements oder ist an Flächen einer Speicherzelle oder eines Wärmeleitelements angebracht oder ist zwischen Speicherzellen und einem Wärmeleitelement angeordnet. Als ein Dämpfungselement wird im Sinne der Erfindung insbesondere ein Bauelement verstanden, welches auch Relativbewegungen zwischen Speicherzellen, ggf. auch zwischen Speicherzellen und anderen Bauelementen, abfangen kann. Während herkömmliche Dämpfungselemente gewöhnlich aus einem Material hergestellt sind, das eine sehr geringe Wärmeleitfähigkeit aufweist, wie etwa PU-Schaum, Moosgummi, Wellpappe oder dergleichen, ist das Dämpfungselement nach der vorliegenden Erfindung in dieser bevorzugten Ausgestaltung wärmeleitend ausgebildet. Es ist in diesem Zusammenhang wieder von einer technisch nutzbaren und konstruktiv intendierten Wärmeleitfähigkeit, nicht etwa von einer auch bei an sich wärmedämmenden Materialien vorhandenen, minimalen und physikalisch unvermeidlichen Restwärmeleitung die Rede. Erfindungsgemäß weist die Spanneinrichtung wenigstens ein Spannband auf, das mit dem wärmeleitenden Material ausgebildet ist und das vorzugsweise wenigstens in Abschnitten in sich federnd, insbesondere wellenfederförmig, ausgebildet ist, wobei erfindungsgemäß mehrere Spannbänder vorgesehen sind, von denen wenigstens ein Spannband wenigstens ein anderes Spannband überdeckt. Unter einem Spannband wird im Sinne der Erfindung ein längliches, insbesondere flaches, bandartiges Bauelement verstanden, welches auch verwendbar ist, eine Anordnung von Speicherzellen gegeneinander zu verspannen, insbesondere umschlingend zu verspannen. Dabei kann ein Verschlussmechanismus, ein Spannmechanismus oder dergleichen vorgesehen sein, um eine Montage unter Spannung zu ermöglichen. Durch eine in sich federnde Ausbildung kann auch erreicht werden, dass eine gleichmäßige Spannkraft auf den Zellblock ausgeübt. Eine elastische Längung des Spannbandes kann derart ausgelegt sein, dass das Spannband bei Montage unter Vorspannung Übermaß gegenüber dem Zellblock aufweist und über diesen gestreift werden kann, wobei dann, wenn die Vorspannung nachgelassen wird, sich das Spannband fest um den Zellblock legt. Hierzu kann das Spannband in Abschnitten beispielsweise wellenfederförmig ausgebildet sein. Besonders vorteilhaft weisen die wellenfederförmig ausgebildeten Abschnitte ebene Abschnitte auf, die sich unter Spannung flächig an Wärmeaustauschflächen von Speicherzellen, Wärmeleitelementen oder dergleichen anlegen.

In einer weiteren bevorzugten Ausgestaltung der Erfindung weist die Spanneinrichtung eine Mehrzahl von Zugankern auf, die mit dem wärmeleitenden Material ausgebildet sind. Als ein Zuganker wird im Sinne der Erfindung ein länglich ausgebildeter, insbesondere eine Gesamtlänge des Zellstapels überragender Stab verstanden, welcher inbesondere über Druckelemente wie Platten oder Flansche, die in einer Stapelrichtung der Speicherzellen auf die jeweils äußeren Speicherzellen drücken, den Zellblock verspannt. Üblicherweise sind mehrere Zuganker vorgesehen, etwa vier, sechs, acht oder mehr. Solche Zuganker weisen beispielsweise einen Kopf an einem Ende und ein Gewinde an dem anderen Ende oder Gewinde an beiden Enden auf, um eine zuverlässige Verspannung durch Anziehen durch Einschrauben oder Verschrauben mit Hilfe von Muttern zu ermöglichen. Die Verwendung von Zugankern hat bei entsprechender Formgebung der Speicherzellen auch den Vorteil, dass Speicherzellen vor dem Verspannen auf verhältnismäßig einfache Weise auf die Zuganker gefädelt werden können, was auch die Montage vereinfachen kann. Zuganker können sich beispielsweise durch entsprechende Ausnehmungen von Rahmenelementen von Rahmenflachzellen erstrecken und von diesen Wärme aufnehmen.

In einer weiter bevorzugten Ausgestaltung weist die Spanneinrichtung Halteelemente und Spannelemente auf, wobei die Halteelemente im Wechsel mit den Speicherzellen angeordnet sind, um die Speicherzellen zwischen sich zu halten, und wobei die Spannelemente die Halteelemente mit den Speicherzellen verspannen, wobei die Halteelemente wenigstens abschnittweise mit Wärmeaustauschflächen der Speicherzellen thermisch gekoppelt sind, und wobei die Spannelemente wenigstens abschnittweise an Wärmeaustauschflächen der Halteelementen anliegen. Dabei ist es vorteilhaft, wenn die Halteelemente wenigstens zwischen den Kontaktflächen mit den Speicherzellen und den Kontaktflächen mit den Spannelementen mit einem wärmeleitenden Material ausgebildet sind. Auf diese Weise kann auch eine zuverlässige Verspannung der Halteelemente und der Speicherzellen zu einem Batterieblock vorgesehen sein. Wärmeaustauschflächen der Halteelemente können Außenflächen, insbesondere Randflächen, der Halteelemente sein, beispielsweise, aber nicht nur, wenn Spannbänder als Spannelemente vorgesehen sind. Spannelemente wie beispielsweise, aber nicht nur, Zuganker können auch durch Durchlässe, etwa Bohrungen, in den Halteelementen geführt sein; in diesem Fall können Wärmeaustauschflächen der Halteelemente durch Innenflächen der Durchlässe gebildet sein. Wärmeaustauschflächen der Speicherzellen können durch Flach- oder Randseiten der Speicherzellen, durch Stromableiter oder an Durchtrittsbereichen von Stromableitern durch eine Einhausung der Speicherzellen vorgesehen sein.

Weiter bevorzugt ist die Energiespeichervorrichtung derart ausgestaltet, dass die Spanneinrichtung wenigstens abschnittweise, insbesondere durch flächigen Kontakt, mit Abschnitten einer Wärmetauschereinrichtung thermisch gekoppelt ist, wobei die Wärmetauschereinrichtung vorzugsweise an einen Wärmeträgerkreislauf angeschlossen ist und wobei der Wärmeträgerkreislauf vorzugsweise steuerbar bzw. regelbar ist. Auf diese Weise kann die Spanneinrichtung von den Speicherzellen aufgenommene Wärme zu der Wärmetauschereinrichtung transportieren und dort an einen Wärmeträger wie beispielsweise, aber nicht nur, Wasser oder Öl abgeben. Der erwärmte Wärmeträger kann durch den Wärmeträgerkreislauf zirkulieren und an anderer Stelle die aufgenommene Wärme wieder abgeben, etwa an einen Luftkühler oder dergleichen.

Besonders bevorzugt liegt die Wärmetauschereinrichtung wenigstens abschnittweise mit Wärmeaustauschflächen der Speicherzellen an, wobei die Speicherzellen eine flache prismatische Form aufweisen und Wärmeaustauschflächen an wenigstens zwei, vorzugsweise gegenüberliegenden Schmalseiten der Speicherzellen vorgesehen sind. So können die Speicherzellen einerseits durch direkten Kontakt Wärme an die Wärmetauschereinrichtung abgeben, und andererseits Wärme an Stellen, die nicht mit der Wärmetauschereinrichtung in Kontakt sind, an die Spanneinrichtung abgeben. Vorzugsweise verspannt die Spanneinrichtung dabei die Zellen sowohl untereinander als auch mit der Wärmetauschereinrichtung.

Nach einem weiteren Gesichtspunkt wird eine Energiespeicherzelle vorgeschlagen, mit einem aktiven Teil und einer den aktiven Teil umgebenden Einhausung, sowie mit Wärmeleitmitteln, wobei die Wärmeleitmittel ausgelegt und eingerichtet sind, Wärme von wenigstens einer im Betrieb der Energiespeicherzelle wärmeren Fläche der Energiespeicherzelle an wenigstens zwei im Betrieb der Energiespeicherzelle kühleren Flächen der Energiespeicherzelle zu leiten. Wenn mehrere solcher Energiespeicherzellen zu einem Block zusammengefasst werden, ist es möglich, an beiden kühleren Flächen Wärme durch direkten Kontakt an eine Spanneinrichtung, etwa ein Spannband, oder an ein Spannband auf der einen Seite und an einen Wärmetauscher auf der anderen Seite abzugeben. Eine solche Energiespeicherzelle ist also insbesondere zur Verwendung in einer Energiespeichervorrichtung, wie sie zuvor beschrieben wurde, geeignet. Darüber hinaus kann bei einer solchen Energiespeicherzelle auch ohne explizite Kühlung das Wärmeprofil der Energiespeicherzelle ausgeglichen werden.

In einer bevorzugten Ausgestaltung ist die Energiespeicherzelle mit einem prismatischen, elektrisch isolierenden Rahmenteil und zwei flachen, elektrisch leitenden Seitenteilen versehen, wobei das Rahmenteil und die Seitenteile die Einhausung ausbilden, wobei Stromableiterfahnen des aktiven Teils mit jeweils einem der Seitenteile verbunden sind, sodass die Seitenteile elektrische Pole der Energiespeicherzelle ausbilden, die durch das Rahmenteil elektrisch voneinander isoliert sind, und wobei wenigstens zwei, vorzugsweise gegenüberliegende Schmalseiten des Rahmenteils wenigstens abschnittweise durch abgewinkelte Abschnitte wenigstens eines der Seitenteile bedeckt sind.

Nach einem weiteren Gesichtspunkt wird ein Wärmeleitelement vorgeschlagen, mit einer dünnwandigen Struktur, insbesondere zur Aufnahme einer Energiespeicherzelle, wobei die dünnwandige Struktur eine Form eines vorzugsweise flachen Quaders umschreibt, und wobei die dünnwandige Struktur wenigstens eine Flachseite und wenigstens zwei an die Flachseite angrenzende Schmalseiten aufweist. Wenn eine Energiespeicherzelle, insbesondere eine Flachzelle, beispielsweise, aber nicht nur, eine Rahmenflachzelle, in einem solchem Wärmeleitelement aufgenommen ist, kann die wenigstens eine Flachseite der dünnwandigen Struktur des Wärmeleitelements Wärme von einem an die Flachseite angrenzenden aktiven Teil der Zelle aufnehmen und an die wenigstens zwei Schmalseiten leiten. Wenn mehrere Energiespeicherzellen mit einem solchen Wärmeleitelement zu einem Block zusammengefasst werden, ist es möglich, an den Schmalseiten Wärme durch direkten Kontakt an eine Spanneinrichtung, etwa ein Spannband, oder an ein Spannband auf der einen Seite und an einen Wärmetauscher auf der anderen Seite abzugeben. Ein solches Wärmeleitelement ist also insbesondere zur Verwendung in einer Energiespeichervorrichtung, wie sie zuvor beschrieben wurde, geeignet. Falls die Flachseiten der Energiespeicherzelle elektrische Pole bilden, ist es vorteilhaft, wenn das Wärmeleitelement aus einem Leitermaterial ausgebildet ist, wobei durch geeignete Maßnahmen ein Kurzschließen zwischen den gegenüberliegenden Polen der Energiespeicherzelle zu vermeiden ist.

In einer bevorzugten Ausgestaltung ist wenigstens eine Schmalseite durch Umbiegen einer an die Flachseite angrenzenden Lasche nach Aufnahme einer Energiespeicherzelle herstellbar, wobei vorzugsweise eine die Energiespeicherzelle wenigstens im Wesentlichen allseitig umschließende Struktur entsteht.

Eine erfindungsgemäße Energiespeichervorrichtung ist insbesondere zur Verwendung in einem Kraftfahrzeug vorgesehen, wobei das Kraftfahrzeug insbesondere ein Hybridfahrzeug oder ein Elektrofahrzeug ist. Die vorstehenden und weitere Merkmale, Aufgaben und Vorteile der vorliegenden Erfindung werden aus der nachstehenden Beschreibung deutlicher ersichtlich werden, die unter Bezugnahme auf die beigefügten Zeichnungen angefertigt wurde.

In den Zeichnungen zeigen:
- Fig. 1: einen federelastisch verspannten Zellblock aus mehreren Rahmenflachzellen in einer schematischen Querschnittsansicht;
- Fig. 2: eine Batterie mit als Rahmenflachzellen ausgebildeten Zellen, bei der zwischen einer den Zellblock umlaufenden Spanneinrichtung und dem Zellblock ein elastisches Element eingelegt ist, in einer schematischen Querschnittsansicht;
- Fig. 3: eine Batterie mit einem verspannten Zellblock aus mehreren Rahmenflachzellen in einer schematischen räumlichen Ansicht;
- Fig. 4: eine Explosionsdarstellung der Batterie von Fig. 3 in einer schematischen räumlichen Ansicht;
- Fig. 5: eine Batterie mit einem in drei Raumrichtungen verspannten Zellblock aus mehreren Rahmenflachzellen in einer schematischen räumlichen Ansicht;
- Fig. 6: eine Explosionsdarstellung einer Rahmenflachzelle in einer schematischen räumlichen Ansicht;
- Fig. 7: eine schematische Querschnittsdarstellung einer zusammengebauten Zelle gemäß Fig. 6,
- Fig. 8: eine Explosionsdarstellung einer ähnlichen Rahmenflachzelle in einer schematischen räumlichen Ansicht;
- Fig. 9: eine Explosionsdarstellung einer weiteren Batterie in einer schematischen räumlichen Ansicht;
- Fig. 10: eine schematische räumliche Ansicht der Batterie gemäß Fig. 9 in einem zusammengebauten Zustand;
- Fig. 11: eine Rahmenflachzelle und ein Wärmeleitelement in einer schematischen räumlichen Darstellung;
- Fig. 12: ein ähnliches Wärmeleitelement in einer schematischen räumlichen Darstellung;
- Fig. 13: ein anderes Wärmeleitelement in einer schematischen räumlichen Darstellung;
- Fig. 14: ein Wärmeleitelement gemäß Fig. 13 mit einer Batteriezelle in einer schematischen räumlichen Darstellung;
- Fig. 15: eine Batterie mit mehreren Batteriezellen und Wärmeleitelementen gemäß Fig. 14, die mit einer Bodenplatte und einer stirnseitigen Kühlplatte verspannt sind, in einer schematischen räumlichen Ansicht;
- Fig. 16: eine Batterie mit einer Mehrzahl von Pouchzellen, die mittels Zugankern zwischen Rahmenelementen verspannt sind;
- Fig. 17: eine Batterie mit mehreren Reihen von zylindrischen Batteriezellen, die mittels eines Befestigungsbandes mit einer Batteriegehäusewand verspannt sind, in einer schematischen Draufsicht;
- Fig. 18: eine Batterie mit mehreren Reihen von zylindrischen Batteriezellen, die mittels Befestigungsbändern zwischen zwei Batteriegehäusewänden verspannt sind, in einer schematischen Draufsicht;
- Fig. 19: eine Pouchzelle mit elastischen Elementen in einer schmatischen räumlichen Ansicht;
- Fig. 20: ein Wärmeleitelement mit elastischen Schichten in einer schematischen Querschnittsansicht.

Es ist darauf hinzuweisen, dass die Darstellungen in den Figuren schematisch sind und sich wenigstens im Wesentlichen auf die Wiedergabe von für das Verständnis der Erfindung hilfreichen Merkmalen beschränken. Auch ist darauf hinzuweisen, dass in den Figuren wiedergegebene Abmessungen und Größenverhältnisse im Wesentlichen der Deutlichkeit der Darstellung geschuldet sind und nicht notwendig einschränkend zu verstehen sind, es sei denn, aus der Beschreibung ergäbe sich etwas anderes.

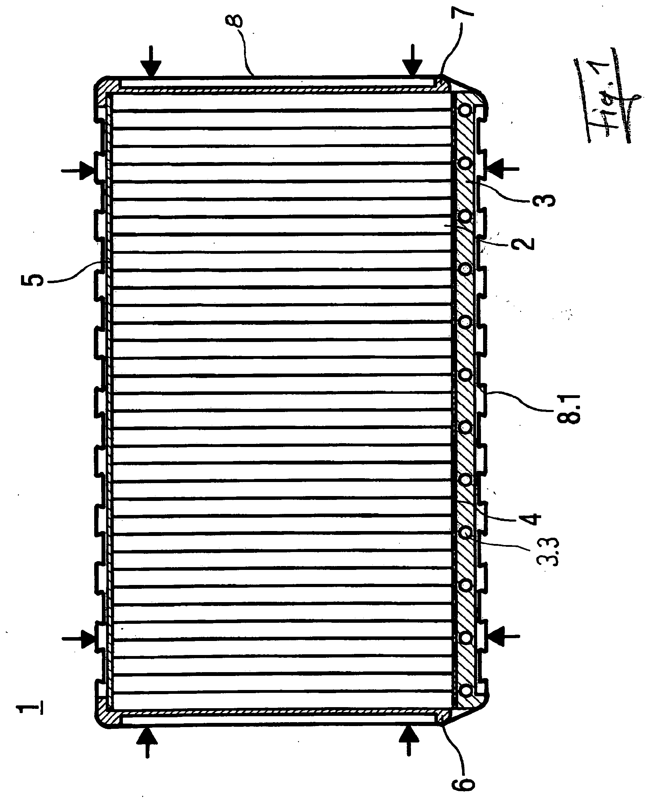

Fig. 1 veranschaulicht in einer schematisierten (Teil-)Schnittdarstellung eine Batterie 1 mit mehreren einen Zellenverbund bildenden galvanischen Zellen 2 als ein Ausführungsbeispiel. Die Zellen 2 sind in Fig. 1 ungeschnitten dargestellt.

Die galvanischen Zellen 2 sind Sekundärzellen (Akkumulatorzellen) mit aktiven Bereichen, die Lithium enthalten. Derartige, als Lithium-Ionen-Zellen oder dergleichen bekannte galvanische Zellen sind in ihrem Aufbau grundsätzlich bekannt. Im Rahmen dieser Anmeldung werden die galvanischen Zellen 2 der Einfachheit halber als Zellen 2 bezeichnet. In diesem Ausführungsbeispiel sind die Zellen 2 als so genannte Rahmenflachzellen mit einem schmalen, im Wesentlichen quaderförmigen Zellgehäuse ausgebildet. Die Zellen 2 sind planparallel hintereinander angeordnet und je nach Anwendung parallel oder/und seriell miteinander elektrisch verschaltbar.

Unter den Zellen 2 ist eine Kühlplatte 3 zum Temperieren der Zellen 2 angeordnet. Die Kühlplatte 3 weist in ihrem Inneren einen in der Figur mehrfach geschnittenen Kühlkanal 3.3, der von einem Kühlmittel durchströmbar ist, auf. Zwischen der Kühlplatte 3 und den Bodenflächen der Zellen 2 ist eine Wärmeleitfolie 4 aus elektrisch isolierendem Material angeordnet, welche die Kühlplatte 3 von den Zellen 2 elektrisch isoliert. Über den Zellen 2 ist eine Andruckplatte 5 aus einem elektrisch isolierenden Material mit guten Wärmeleiteigenschaften wie etwa einem verstärkten Kunststoff mit wärmeleitenden Dotierungen angeordnet. Alternativ kann die Andruckplatte 5 aus einem Metall wie etwa Stahl, Aluminium oder dergleichen hergestellt sein, wobei dann im Bereich des Aufliegens auf den oberen Schmalseiten der Zellen 2 eine elektrisch isolierende Beschichtung oder eine elektrisch isolierende Zwischenlage ähnlich der Wärmeleitfolie 4 vorgesehen ist.

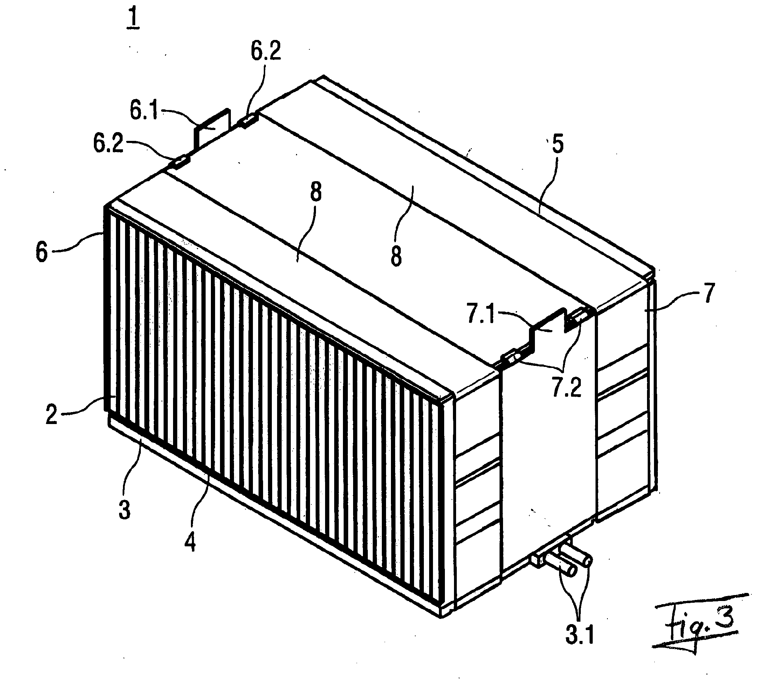

An einem vorderen Ende des Zellenverbundes befindet sich eine vordere Polplatte 6, und an einem hinteren Ende des Zellenverbundes ist eine hintere Polplatte 7 angeordnet. Die Polplatten 6 und 7 bilden jeweils einen Pol der Batterie 1 und weisen jeweils eine über die Andruckplatte 5 hinaus ragende fahnenartige Verlängerung (vgl. 6.1, 7.1 in weiter unten genauer beschriebener Fig. 3) auf, welche jeweils einen Polkontakt der Batterie 1 bildet.

Ferner weisen die Polplatten 6 und 7 jeweils zwei Befestigungsnasen (vgl. 6.2, 7.2 in Fig. 3) auf, die parallel zu der Andruckplatte 5 von der jeweiligen Polplatte 6, 7 abgewinkelt sind und auf der Andruckplatte 5 anliegen. Die Andruckplatte 5, die Zellen 2 und die Kühlplatte 3 sind durch zwei Spannelemente 8 (nur eines in Fig. 1 sichtbar) aneinander gepresst, die jeweils um die Andruckplatte 5, die Polplatten 6, 7 und die Kühlplatte 3 herum geführt sind. In dem vorliegenden Ausführungsbeispiel sind die Spannelemente 8 als in sich elastische Spannbänder 8 ausgebildet, wobei sich die Eigenelastizität im Wesentlichen durch Federzonen 8.1 einstellt. Die Federzonen 8.1 sind durch eine wellenartige Formgebung der Spannbänder 8 verwirklicht. Die Federzonen 8.1 sind dabei vorzugsweise dort ausgebildet, wo die Spannbänder 8 nicht über Kanten der Polplatten 6, 7 oder der Kühlplatte 3 verlaufen, insbesondere an der Ober- und Unterseite der Batterie 1. Ihre Wellenform weist wenigstens im Bereich der Auflage der Wellentäler auf den der Kühlplatte 3 und der Andruckplatte 5 wenigstens teilweise wenigstens im Wesentlichen ebene Abschnitte auf, um eine große Kontaktfläche. Die Einleitung der Kräfte in den Zellblock 1 erfolgt in axialer Richtung über die vordere Polplatte 6 und die hintere Polplatte 7. In der dazu senkrechten Richtung wird die Kraft unten über die Kühlplatte 3 und oben über die Andruckplatte 5 eingeleitet. Zur Vermeidung eines Kurzschlusses sind die Polplatten 6, 7 ferner wenigstens dort, wo die Spannbänder 8 aufliegen mit einer elektrisch isolierenden Beschichtung oder einer elektrisch isolierenden Zwischenlage ähnlich der Wärmeleitfolie 4 versehen. (Obschon in der Figur nicht näher dargestellt, können die Spannbänder auch im Bereich der Polplatten 6, 7 elastische Abschnitte aufweisen.)

Die Spannbänder 8 sind aus einem guten Wärmeleiter wie etwa Federstahl ausgebildet und weisen im Bereich der Wellentäler der Federzonen 8.1 wärmeleitenden Kontakt mit der Andruckplatte 5 und der Kühlplatte 3 auf.

Zumindest im Bereich der Polplatten ist eine elektrisch isolierende Beschichtung der Spannbänder 8 oder eine isolierende Zwischenlage vorgesehen. In einer Ausführungsvariante können die Spannbänder aus einem Nichtleitermaterial hergestellt sein, etwa aus einem wärmeleitenden Kunststoff, vorzugsweise mit Glasfaser-, Kevlar- oder Metallarmierung und einem wärmeleitenden Füllmaterial. In einem solchen Fall ist eine zusätzliche Isolierung unter Umständen nicht erforderlich.

Durch die wärmeleitenden Eigenschaften des Spannbandes 8 und der Andruckplatte 5 und den wärmeleitenden Kontakt der Andruckplatte 5 mit den Zellenoberseiten und dem Spannband 8 kann einerseits auch im oberen Bereich der Batterie ein Wärmeausgleich zwischen den Zellen 2 sowie ein Wärmetransport von der Oberseite zu der auf der Unterseite liegenden Kühlplatte 3 erfolgen.

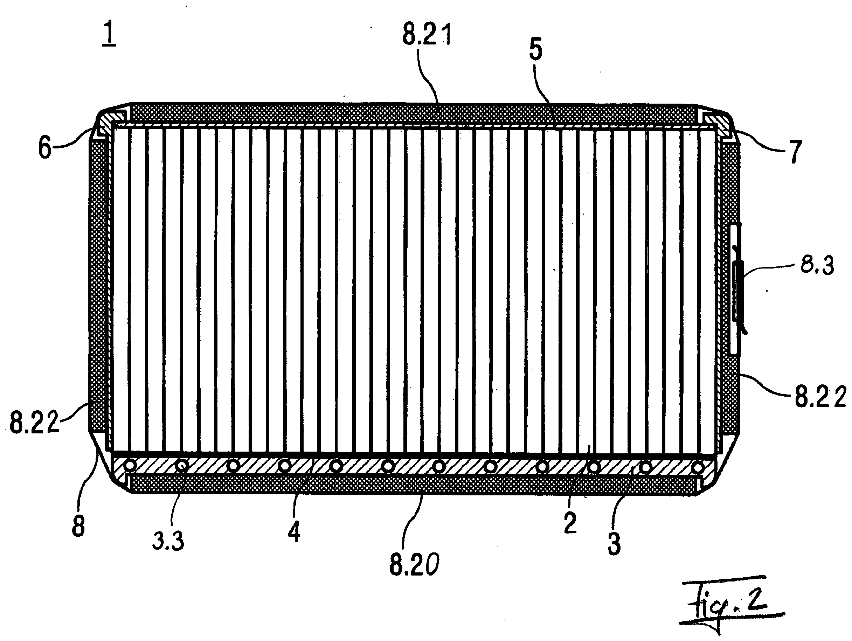

In Fig. 2 ist in einer Darstellung entsprechend Fig. 1 ein weiteres Ausführungsbeispiel, bei welchem Wärmeleitelemente 8.20, 8.21, 8.22 zwischen einem einen Zellblock umlaufenden Spannband 8 und dem Zellblock vorgesehen sind.

Gemäß der Darstellung in Fig. 2 ist ein unteres Wärmeleitelement 8.20 zwischen dem Spannband 8 und der Kühlplatte 3, ein oberes Wärmeleitelement 8.21 zwischen dem Spannband 8 und der Andruckplatte 5 und stirnseitige Wärmeleitelemente 8.22 zwischen dem Spannband 8 und den Polplatten 6, 7 vorgesehen. Als Wärmeleitelemente 8.20, 8,21, 8,22 können starre Metallblöcke, etwa Aluminiumblöcke, verwendet werden. Das Spannband umläuft den Zellblock und gewährleistet eine gleich bleibende Anpresskraft in axialer Richtung sowie in Richtung der Hochachse. Das Spannband 8 ist mittels eines Crimpverschlusses 8.3 verschlossen; dies sorgt für eine sichere Verspannung der Batterie 1.

In einer Ausführungsvariante können die Wärmeleitelemente 8.20, 8,21, 8,22 elastische Eigenschaften aufweisen und z. B. als Wellblechfedern, mit Metallspänen gefüllte Kissen, metalldotierte Schaumstoffmatten, Kissen oder Matten mit einem wärmeleitenden Gel oder dergleichen ausgestaltet sein.

Anders als in dem in Fig. 1 dargestellten Ausführungsbeispiel ist das Spannband 8 gerade, d.h., ohne elastische Wellung, ausgebildet und liegt vollflächig auf den Wärmeleitelementen 8.20, 8.21, 8.22 auf.

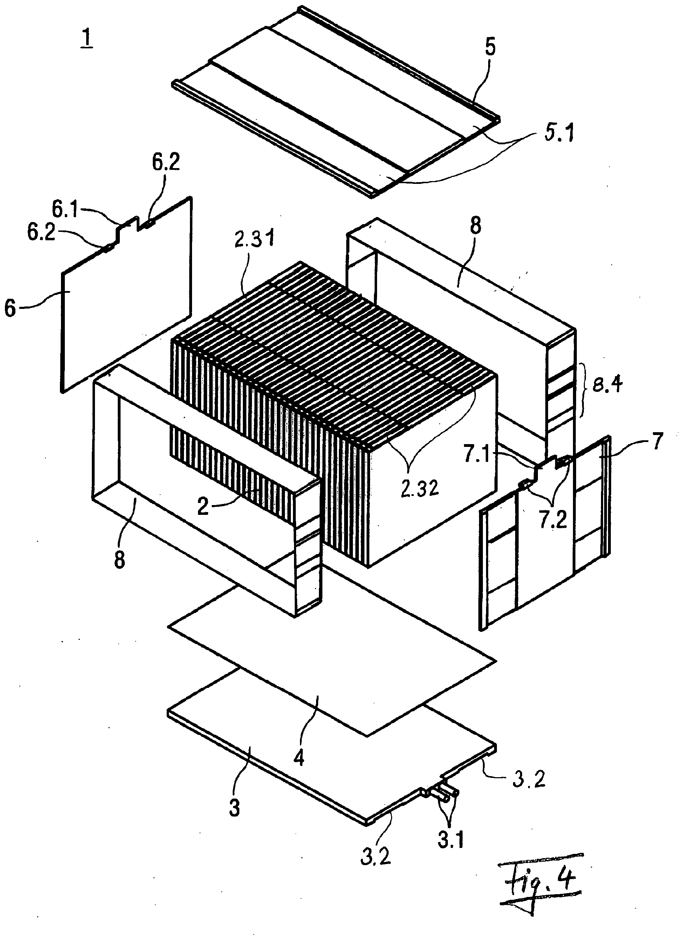

Die Fign. 3 und 4 veranschaulichen in schematisierten räumlichen Ansichten eine weitere Ausführungsvariante einer Batterie 1 gemäß Fig.1 oder Fig. 2. Dabei zeigt Fig. 3 einen Zusammenbauzustand der Batterie 1 und zeigt Fig. 4 die Batterie 1 in einer Explosionsdarstellung.

Die Kühlplatte 3 weist in ihrem Inneren einen Kühlkanal (3.3 in Fig. 1 und 2), der von einem Kühlmittel durchströmbar ist, sowie zwei Kühlmittelanschlüsse 3.1 zum Zu- und Abführen des Kühlmittels auf. Über die Kühlmittelanschlüsse 3.1 ist die Kühlplatte 3 an einen nicht dargestellten Kühlmittelkreislauf anschließbar, über den von dem Kühlmittel aufgenommene Abwärme aus der Batterie 1 abführbar ist.

In dieser Ausführungsvariante ist die Spanneinrichtung durch zwei metallische Spannbänder 8 verwirklicht, die mit einer elektrisch isolierenden, aber Wärme leitenden Schicht versehen sind. Die Spannbänder 8 weisen einen Spannbereich 8.4 auf, der in der dargestellten Ausführungsvariante als wellenartiger Dehnbereich ausgebildet ist. Anstelle eines Dehnbereichs kann auch ein Crimpverfahren angewendet werden, um die Spannbänder zu spannen und die Enden fest miteinander zu verbinden. In einer weiteren Alternative können Knebelverschlüsse, Schraubverschlüsse oder eine vergleichbare Art von Spannschloss vorgesehen sein. Obschon in der Figur nur auf der Seite der hinteren Polplatte 7 ein Spannbereich 8.4 zu sehen ist, können solche Spannbereiche auch auf der Seite der vorderen Polplatte 6 vorgesehen sein.

Die Spannbänder 8 verlaufen in Vertiefungen 5.1 über die Andruckplatte 5, in Vertiefungen 7.3 über die hintere Polplatte 7, in Vertiefungen 3.2 über die Kühlplatte 3 und in nicht näher dargestellten Vertiefungen über die vordere Polplatte 6.

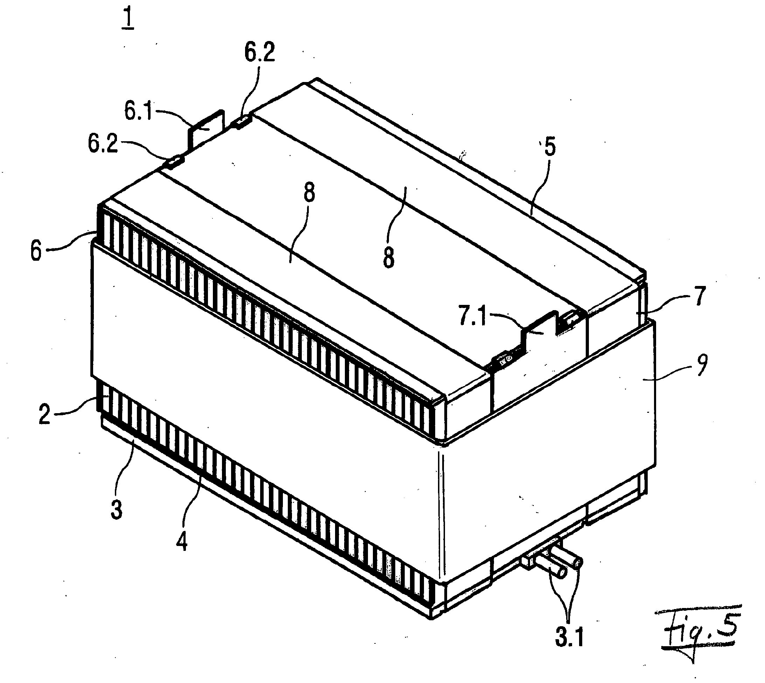

Fig. 5 veranschaulicht in einer schematisierten räumlichen Ansicht eine erfindungsgemäße Ausführungsvariante der Batterie 1 gemäß Fig. 3.

Zusätzlich zu den vertikal verlaufenden Spannbändern 8 ist noch ein weiteres Spannband 9 vorgesehen, welches die Batterie 1 horizontal umschließt. Es verläuft in nicht näher dargestellten Vertiefungen in den lateralen Schmalseiten der Zellen 2 und der vorderen und hinteren Polplatte 6, 7 und überdeckt im Bereich der Polplatten 6, 7 die Spannbänder 8. In einer Ausführungsalternative können die Spannbänder 8 das Spannband 9 überdecken.

In einer weiteren Variante können auch zwischen dem Spannband 9 und den lateralen Schmalseiten der Zellen 2 Andruckplatten (nicht näher dargestellt) vorgesehen sein.

In allen Ausführungsvarianten ist im Falle elektrisch leitender Spannelemente eine elektrischer Kontakt derselben mit den Polplatten 6, 7 durch geeignete Maßnahmen, wie vorstehend beschrieben, zu vermeiden.

Die Andruckplatte 5 ist in einer Ausführungsvariante wenigstens teilweise als Leiterplatte aus einem elektrisch isolierenden Trägermaterial, vorzugsweise aus Kunststoff mit einer optionalen Glasfaserverstärkung, ausgebildet und trägt elektrische Bauelemente zur Überwachung und/oder Steuerung der Batteriefunktionen sowie Leiterbahnen, die jeweils nicht dargestellt sind. Derartige elektrische Bauelemente sind beispielsweise Zellspannungsüberwachungselemente und/oder Zellspannungsausgleichselemente zum Ausgleich unterschiedlicher Ladungsstände von Zellen, welche beispielsweise auf der Leiterplatte in Form von Mikrochips vorliegen, und/oder Temperatursensoren zur Überwachung einer Temperatur der Zellen 2. Wenigstens in Bereichen, auf welchen die Spannbänder 8 bzw. Wärmeleitelemente 8.21 aufliegen, weist die Andruckplatte 5 gute Wärmeleiteigenschaften auf; derartige Zonen können auch als Wärmeleitzonen bezeichnet werden. Die Andruckplatte 5 ist dabei vorzugsweise ferner so ausgebildet, dass Wärme erzeugende und / oder wärmeempfindliche Schaltungselemente in der Nähe der Wärmeleitzone und / oder in wärmeleitendem Kontakt mit der Wärmeleitzone anordenbar sind. Besonders bevorzugt weist die Leiterplatte selbst gute Wärmeleiteigenschaften auf und bildet als solches die Andruckplatte 5. Die Andruckplatte 5 kann in einer weiteren Ausführungsvariante ganz aus einem Material mit guten Wärmeleiteigenschaften ausgebildet sein, wobei in Bereichen, an denen keine Spannbänder 8 bzw. Wärmeleitelemente 8.21 aufliegen, eine Leiterplatte wie vorstehend beschrieben vorgesehen ist.

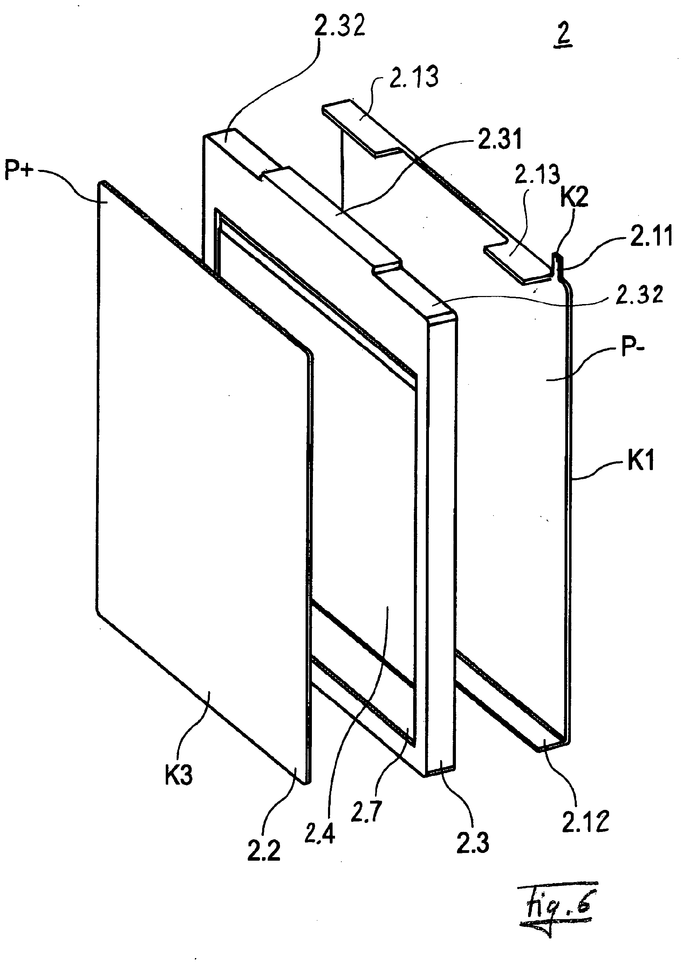

Fig. 6 veranschaulicht in einer schematisierten räumlichen Explosionsdarstellung eine als Flachzelle ausgebildete galvanische Zelle 2 als ein weiteres Ausführungsbeispiel der vorliegenden Erfindung.

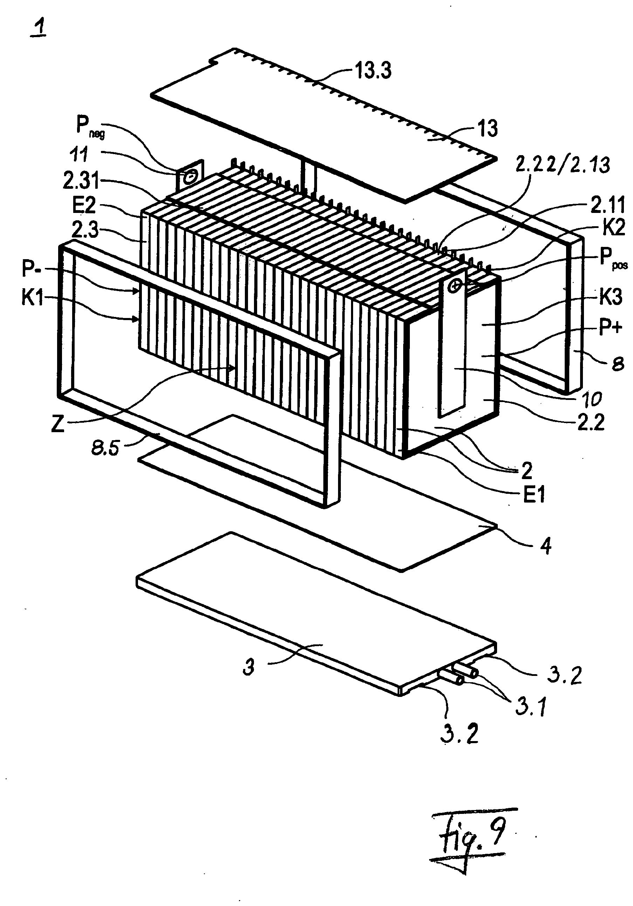

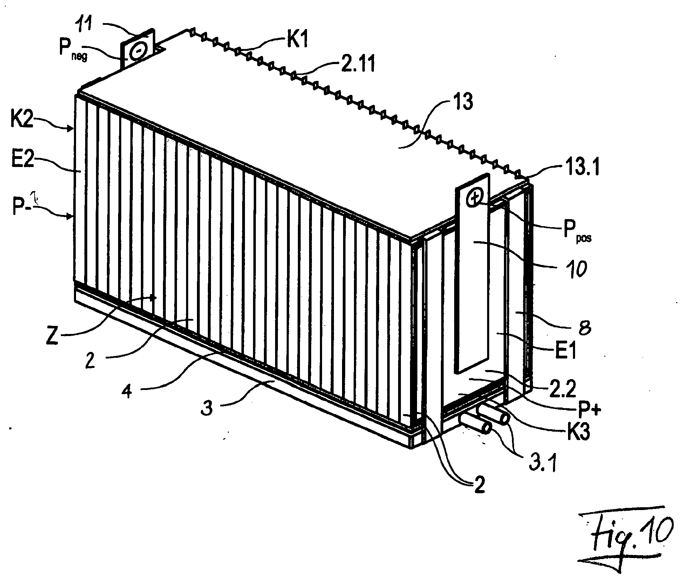

Gemäß der Darstellung in Fig. 6 ist ein Zellgehäuse (eine Einhausung) der Zelle 2 aus zwei Zellgehäuseseitenwänden 2.1, 2.2 und einem dazwischen angeordneten, randseitig umlaufenden Zellgehäuserahmen 2.3 gebildet. Die Zellgehäuseseitenwände 2.1, 2.2 der Zelle 2 sind elektrisch leitend ausgeführt und bilden Pole P+, P- der Zelle 2. Der Zellgehäuserahmen 2.3 ist elektrisch isolierend ausgeführt, so dass die Zellgehäuseseitenwände 2.1, 2.2 unterschiedlicher Polarität elektrisch voneinander isoliert sind. Der Zellgehäuserahmen 2.3 weist zusätzlich an einer Oberseite eine partielle Materialerhöhung 2.31 auf, deren Funktion in der Beschreibung der Fign. 9 und 10 näher erläutert wird.

Die Zelle 2 weist mindestens drei Spannungs-Anschlusskontakte K1 bis K3 auf. Nämlich weist die den Pol P- bildende Zellgehäuseseitenwand 2.1 mindestens zwei Spannungs-Anschlusskontakte K1, K2 auf, die insbesondere zellintern elektrisch miteinander verschaltet, insbesondere parallel geschaltet sind. Dabei ist der erste Spannungs-Anschlusskontakt K1 durch den Pol P- der Zelle 2 und somit die Zellgehäuseseitenwand 2.1 gebildet. Der zweite Spannungs-Anschlusskontakt K2 ist als Messanschluss 2.11 ausgeführt, der radial über die Zellgehäuseseitenwand 2.1 an einer beliebigen Position, über die Zelle 2 als eine fahnenartige Verlängerung hinausragt.

Bei dem vorliegenden Ausführungsbeispiel weist die Zellgehäuseseitenwand 2.1 mit dem fahnenartigen Messanschluss 2.11 in einem unteren Bereich eine um 90° in Richtung des Zellgehäuserahmens 2.3 gebogene Unterkante 2.12 auf, so dass bei einer Verwendung einer in den Fign. 9 und 10 dargestellten Wärmeleitplatte 8 eine Vergrößerung einer wirksamen Wärmeübergangsfläche und somit eine verbesserte Kühlung der Batterie 1 erzielt werden. Ferner weist die Zellgehäuseseitenwand 2.1 mit dem fahnenartigen Messanschluss 2.11 in einem oberen Bereich zwei um 90° in Richtung des Zellgehäuserahmens 2.3 gebogene Laschen 2.13 auf. Im Zusammenbau greifen die Laschen 2.13 neben der Materialerhöhung 2.31 auf die obere Schmalseite 2.32 des Zellgehäuserahmens 2.3, während die Kante 2.12 auf die untere Schmalseite des Zellgehäuserahmens 2.3 greift.

Eine in den Fign. 9 und 10 näher dargestellte Batterie 1 besteht aus mehreren solchen Zellen 1, deren Pole P+, P-, insbesondere die als Flachseiten ausgeführten Zellgehäuseseitenwände 2.1, 2.2, in Abhängigkeit von einer gewünschten Batteriespannung und -leistung parallel und/oder seriell miteinander verschaltet sind und einen in den 5 bis 7 dargestellten Zellverbund Z bilden.

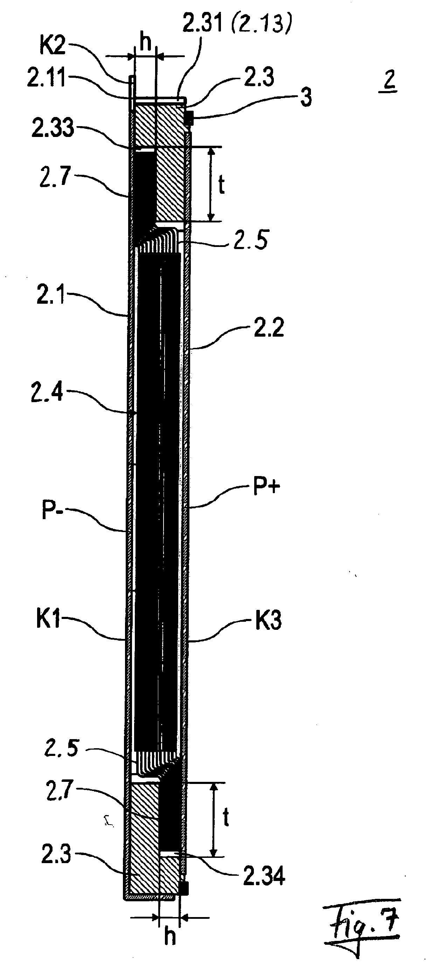

Zunächst wird jedoch der innere Aufbau der Zelle 2 anhand einer Schnittdarstellung in Fig. 7 erläutert.

Gemäß der Darstellung in Fig. 7 ist innerhalb des durch die vorstehend beschriebenen Gehäuseteile 2.1, 2.2, 2.3 aufgebauten Gehäuses ein nicht näher detaillierter aktiver Bereich 2.4 vorgesehen, in welchem Elektrodenfolien 2.5 unterschiedlicher Polarität, insbesondere Aluminium- und/oder Kupferfolien und/oder Folien aus einer Metalllegierung, die mit elektrochemisch aktiven Materialien beschichtet sind, übereinander gestapelt und mittels eines Separators, insbesondere einer Separatorfolie, elektrisch voneinander isoliert sind.

In einem über den mittleren Bereich des Elektrodenstapels 2.4 überstehenden Randbereich der Elektrodenfolien 2.5 sind Elektrodenfolien 2.5 gleicher Polarität elektrisch miteinander verbunden. Die miteinander verbundenen Enden der Elektrodenfolien 2.5 gleicher Polarität bilden somit einen Polkontakt 2.7, der auch als Stromableiterfahne bezeichnet wird. Die Polkontakte 2.7 unterschiedlicher Polarität der Zelle 2 werden im Weiteren zur besseren Übersichtlichkeit als Stromableiterfahnen 2.7 bezeichnet. Im Detail werden die Enden der Elektrodenfolien 2.5 elektrisch leitend miteinander verpresst und/oder verschweisst und bilden die Stromableiterfahnen 2.7 des Elektrodenstapels 2.4.

Der Elektrodenstapel 2.4 ist in dem den Elektrodenstapel 2.4 randseitig umlaufenden Zellgehäuserahmen 2.3 angeordnet. Der Zellgehäuserahmen 2.3 weist dazu zwei voneinander beabstandete Materialrücknahmen 2.33, 2.34 auf, die so ausgebildet sind, dass die Stromableiterfahnen 2.7 unterschiedlicher Polarität in den Materialrücknahmen 2.33, 2.34 angeordnet sind. Die lichte Höhe h der Materialrücknahmen 2.33, 2.34 ist so ausgebildet, dass sie der Erstreckung der unbeeinflusst übereinander gestapelten Stromableiterfahnen 7 entspricht oder geringer als diese ist. Die Tiefe t der Materialrücknahmen 2.33, 2.34 entspricht der Erstreckung der Stromableiterfahnen 7 oder ist größer ausgebildet als diese.

Da der Zellgehäuserahmen 2.3 vorzugsweise aus einem elektrisch isolierenden Material gefertigt ist, sind die Stromableiterfahnen 7 unterschiedlicher Polarität elektrisch voneinander isoliert, so dass zusätzliche Anordnungen für eine elektrische Isolation in vorteilhafter Weise nicht notwendig sind.

Bei einer Befestigung der Zellgehäuseseitenwände 2.1, 2.2, welche beispielsweise in nicht näher dargestellter Weise mittels Kleben und/oder Umbördeln der Flachseiten in eine in dem Zellgehäuserahmen 2.3 umlaufende Aussparung erfolgt, werden die Stromableiterfahnen 2.7 unterschiedlicher Polarität gegen die Zellgehäuseseitenwände 2.1, 2.2 gepresst, so dass ein jeweiliges elektrisches Potenzial der Stromableiterfahnen 2.7 an den Zellgehäuseseitenwänden 2.1, 2.2 anliegt und diese die Pole P+, P- der Zelle 2 bilden.

In einer Ausführungsvariante ist zwischen den Stromableiterfahnen 2.7, welche z. B. aus Kupfer gefertigt sind, und den Gehäuseseitenwänden 2.1, 2.2, welche z. B. aus Aluminium gefertigt sind, zusätzlich eine nicht näher dargestellte Folie, welche z. B. aus Nickel gefertigt ist, angeordnet, um eine verbesserte elektrische Anbindung zwischen den Stromableiterfahnen 2.7 und den Zellgehäuseseitenwänden 2.1, 2.2 zu erreichen.

In weiteren Ausführungsvarianten ist eine nicht näher dargestellte elektrisch isolierende Folie zwischen den Stromableiterfahnen 2.7 und den Zellgehäuseseitenwänden 2.1, 2.2 angeordnet oder sind die Zellgehäuseseitenwände 2.1, 2.2 einseitig mit einer elektrischen isolierenden Schicht ausgeführt, so dass eine elektrische Kontaktierung der Stromableiterfahnen 2.7 mit den Zellgehäuseseitenwänden 2.1, 2.2 erst bei einem nicht näher ausgeführten, aus dem Stand der Technik bekannten Durchschweißverfahren von außen durch die Zellgehäuseseitenwände 2.1, 2.2 entsteht.

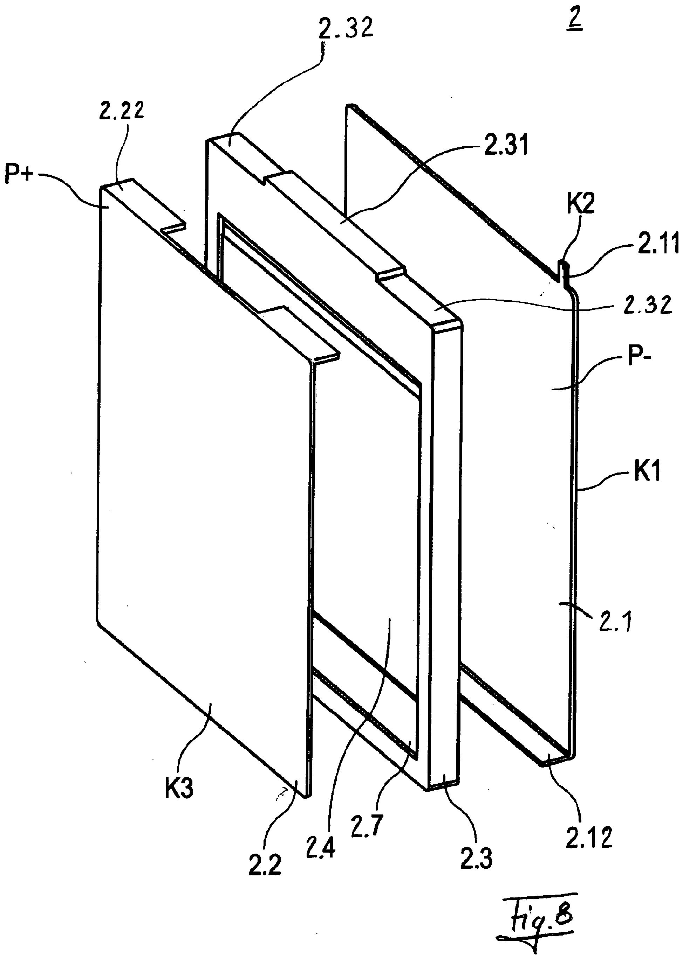

Fig. 8 veranschaulicht in einer schematisierten räumlichen Explosionsdarstellung eine Ausführungsvariante der in Fign. 6 und 7 dargestellten Zelle 2.

Wie in Fig. 6 weist die Zellgehäuseseitenwand 2.1 mit dem fahnenartigen Messanschluss 2.11 in einem unteren Bereich eine um 90° in Richtung des Zellgehäuserahmens 2.3 gebogene Unterkante 2.12 auf. In Abwandlung von Fig. 6 weist die andere Zellgehäuseseitenwand 2.2 in einem oberen Bereich zwei um 90° in Richtung des Zellgehäuserahmens 2.3 gebogene Laschen 2.22 auf. Im Zusammenbau greifen die Laschen 2.22 der zweiten Gehäuseseitenwand 2.2 neben der Materialerhöhung 2.31 auf die obere Schmalseite 2.32 des Zellgehäuserahmens 2.3, während die Kante 2.12 der ersten Gehäuseseitenwand 2.1 auf die untere Schmalseite des Zellgehäuserahmens 2.3 greift.

Fig. 9 veranschaulicht in einer schematisierten räumlichen Explosionsdarstellung eine Batterie 1 mit einem aus mehreren Zellen 2 gebildeten Zellverbund Z als ein weiteres Ausführungsbeispiel. Zur Bildung des Zellverbundes Z werden die Pole P+, P- mehrerer Zellen 1 in Abhängigkeit von einer gewünschten elektrischen Spannung und Leistung der Batterie 1 seriell und/oder parallel elektrisch miteinander verschaltet. Ebenfalls in Abhängigkeit von der gewünschten elektrischen Spannung und Leistung der Batterie 1 kann der Zellverbund Z in Weiterbildungen der Erfindung aus einer beliebigen Anzahl von Zellen 2 gebildet sein.

Eine serielle elektrische Verschaltung der Pole P+, P- der Zellen 2 wird durch die elektrische Kontaktierung der Zellgehäuseseitenwände 2.1, 2.2 von benachbarten Zellen 2 mit unterschiedlichem elektrischem Potenzial realisiert. Dabei ist insbesondere die Zellgehäuseseitenwand 2.2 einer der Zellen 2 kraftschlüssig, formschlüssig und/oder stoffschlüssig mit der Zellgehäuseseitenwand 2.1 mit dem fahnenartigen Messanschluss 2.11 einer benachbarten Zelle 2 elektrisch verbunden.

Die Batterie 1, welche beispielsweise in einem Fahrzeug, insbesondere einem Hybrid- und/oder Elektrofahrzeug zum Einsatz kommt, ist im dargestellten Ausführungsbeispiel aus dreißig Zellen 2 gebildet, welche elektrisch seriell miteinander verschaltet sind. Zu einer Entnahme und/oder einer Zuführung von elektrischer Energie aus und/oder in die Batterie 1 ist an der Zellgehäuseseitenwand 2.2 der ersten Zelle E1 des Zellverbundes Z, welche insbesondere den positiven Pol P+ der ersten Zelle E1 bildet, ein elektrisches Anschlusselement 10 angeordnet. Dieses Anschlusselement 10 ist als elektrische Anschlussfahne ausgeführt und bildet den positiven Polanschluss Pₚₒₛ der Batterie 1.

Auch an der Zellgehäuseseitenwand 2.1 der letzten Zelle E2 des Zellverbundes Z, welche insbesondere den negativen Pol P- der letzten Zelle E2 bildet, ist ein elektrisches Anschlusselement 11 angeordnet. Dieses Anschlusselement 11 ist ebenfalls als elektrische Anschlussfahne ausgeführt und bildet den negativen Polanschluss P_{neg} der Batterie 1.

In der dargestellten Ausgestaltung ist der Zellverbund Z thermisch mit der Wärmeleitplatte 3 gekoppelt. Dabei sind die Zellgehäuseseitenwände 2.1 mit dem um 90° in Richtung des Zellgehäuserahmens 2.3 gebogenen unteren Rand 2.12 direkt oder indirekt über ein wärmeleitfähiges Material, insbesondere eine Wärmeleitfolie 4, thermisch an die Wärmeleitplatte 3 gekoppelt.

In einer Weiterbildung kann das wärmeleitfähige Material zusätzlich oder alternativ aus einer Vergussmasse und/oder einem Lack gebildet sein.

Zum Zwecke einer kraftschlüssigen Verbindung der Zellen 2 zu dem Zellverbund Z und einer kraftschlüssigen Anbindung der Wärmeleitplatte 3 und der Wärmeleitfolie 4 an den Zellverbund Z sind der Zellverbund Z, die Wärmeleitplatte 3 und die Wärmeleitfolie 4 in einem Gehäuserahmen angeordnet.

Dieser Gehäuserahmen ist insbesondere aus einem oder mehreren den Zellverbund Z vollständig umschliessenden Spannelementen, z. B. Spannbändern 8, gebildet, welche die Zellen 2 bzw. den Zellverbund Z, die Wärmeleitplatte 3 und die Wärmeleitfolie 4 sowohl in horizontaler als auch in vertikaler Richtung kraftschlüssig verbinden.

Um einen sicheren Halt der Spannelemente 8 zu ermöglichen, sind an einer Unterseite der Wärmeleitplatte 3 vorzugsweise zu den Abmessungen der Spannelemente 8 korrespondierende Materialvertiefungen 3.2 ausgebildet.

Im oberen Bereich der Batterie 1 liegen die Spannelemente 8 flach auf den Laschen 2.13 (Fig. 5) oder 2.22 (Fig. 7) auf. Die Spannelemente 8, hier Spannbänder 8, sind aus einem gut Wärme leitenden, vorzugsweise elektrisch nicht leitenden, Material hergestellt. Soweit die Spannelemente in einer Ausführungsalternative aus einem elektrisch leitenden Material hergestellt sind, ist durch eine Beschichtung oder eine Zwischenlage zwischen der Oberseite der Zellen 2 und den Spannelementen 8 sowie zwischen den freiliegenden Stirnseiten der ersten Zelle E1 und der letzten Zelle E2 und den Spannelementen 8 eine elektrische Isolierung sichergestellt, um einen Kurzschluss zwischen Elementen zu vermeiden.

Durch den wärmeleitenden Kontakt der Spannbänder 8 auf der Oberseite der Zellen 2 und die wärmeleitenden Eigenschaften der Spannbänder 8 kann auch eine Wärmeverteilung an der Oberseite der Zellen 2 sowie ein Abtransport dort anfallender Wärme zu der an der Unterseite der Batterie 1 angeordneten Kühlplatte 3 verwirklicht werden. Auf diese Weise kann die Kühlung einer solchen Batterie 1 weiter verbessert werden.

Der wärmeleitende Kontakt an der Oberseite der Zellen 2 wird durch die an der Oberseite vorgesehenen Laschen 2.13 oder 2.22, welche Teil der flächigen, der im Elektrodenstapel 2.4 der Zelle 2 erzeugten Wärme ausgesetzten Zellenseitenwand 2.1 bzw. 2.2 sind, begünstigt. In einer weiteren, nicht näher dargestellten Ausführungsvariante weist eine der Gehäuseseitenwände 2.1, 2.2 (vgl. Fig. 6 oder 8) in seitlichen Bereichen jeweils eine um 90° in Richtung des Zellgehäuserahmens 2.3 gebogene Seitenkante auf, die im Zusammenbau der Zelle auf die seitlichen Schmalseiten des Zellgehäuserahmens 2.3 greifen. Eine solche Bauform begünstigt den Wärmeübergang, wenn zusätzlich zu den Spannbändern 8 in Fig. 9 ein weiteres, die Spannbänder 8 kreuzendes Spannband vorgesehen ist, wie es in der in Fig. 5 veranschaulichten Ausführungsvariante (vgl. dort Bezugsziffer 9) der Fall ist. Das kreuzende Spannband kann zur Fixierung der Anschlusselemente 10, 11 verwendet werden.

In nicht näher dargestellten Weiterbildungen können einige oder alle Komponenten, d. h. die Zellen 2, die Wärmeleitplatte 3, die Wärmeleitfolie 4 oder die gesamte Batterie 1 alternativ oder zusätzlich in einem Batteriegehäuse teilweise oder vollständig gekapselt verbaut sein.

Ist die Batterie 1 beispielsweise eine Lithium-Ionen-Hochvolt-Batterie, wird im Allgemeinen eine spezielle Elektronik benötigt, welche z. B. eine Zellspannung der Zellen 2 überwacht und korrigiert, ein Batteriemanagementsystem, welches insbesondere eine Leistungsaufnahme und -abgabe der Batterie 1 steuert (= Batteriesteuerung), und Sicherungselemente, welche bei Fehlfunktionen der Batterie 1 eine sichere Abtrennung der Batterie 1 von einem elektrischen Netz durchführen.

Im dargestellten Ausführungsbeispiel ist ein elektronisches Bauelement 13 vorgesehen, welches zumindest nicht näher dargestellte Einrichtungen zur Zellspannungsüberwachung und/oder zu einem Zellspannungsausgleich beinhaltet. Das elektronische Bauelement 13 kann in einer Weiterführung der Erfindung auch als gekapselte elektronische Baueinheit ausgebildet sein.

Das elektronische Bauelement 13 ist kopfseitig an dem Zellverbund auf den Spannelementen 12 und den Zellgehäuserahmen 2.3 der Zellen 2 angeordnet. Um eine möglichst grosse Auflagefläche des elektronischen Bauelementes 13 und gleichzeitig eine Fixierung der Spannelemente 8 an der Oberseite des Zellverbundes Z zu erreichen, ist an der Oberseite des Rahmens 2.3 einer jeden Zelle 2 partiell die Materialerhöhung 2.31 ausgebildet, deren Höhe insbesondere der Dicke des Spannelementes 8 entspricht. Zu einer Befestigung des elektronischen Bauelementes 13 an dem Zellverbund Z und/oder an den Spannelementen 8 kommen nicht näher dargestellte kraftschlüssige, formschlüssige und/oder stoffschlüssige Verbindungstechniken zum Einsatz. Über die Spannbänder 8, auf denen das elektronische Bauelement 13 aufliegt, kann auch ein Abtransport von in dem elektronischen Bauelement 13 erzeugter Wärme zu der an der Unterseite der Batterie 1 angeordneten Kühlplatte 3 verwirklicht werden. Auf diese Weise kann auch die Kühlung eines solchen elektronischen Bauelements 13 weiter verbessert werden.

Für einen elektrischen Kontakt des Zellverbundes Z mit dem elektronischen Bauelement 13 sind die an den Zellgehäuseseitenwänden 2.1 angeordneten fahnenartigen Messanschlüsse 2.11 durch in dem elektronischen Bauelement 13 angeordnete Kontaktelemente 13.3 geführt, die eine zu den fahnenartigen Messanschlüsse 2.11 korrespondierende Form aufweisen.

Zusätzlich sind auch weitere nicht dargestellte elektronische Baueinheiten vorgesehen, welche beispielsweise das Batteriemanagementsystem, die Batteriesteuerung, die Sicherungselemente und/oder weitere Einrichtungen zum Betrieb und zur Steuerung der Batterie 1 beinhalten.

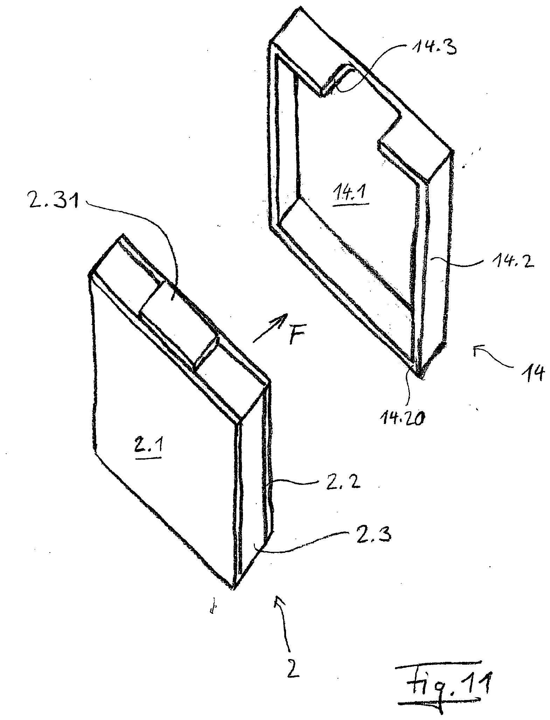

Fig. 11 veranschaulicht als ein weiteres Ausführungsbeispiel eine als Rahmenflachzelle ausgebildete galvanische Zelle 2 und eine Wärmeleiteinrichtung 14 in einer räumlichen Ansicht, wobei die Rahmenflachzelle 2 und die Wärmeleiteinrichtung 14 zum Zwecke der Erläuterung voneinander getrennt dargestellt sind.

Gemäß der Darstellung in Fig. 11 ist die Zelle 2 ähnlich dem Ausführungsbeispiel in Fig. 6 oder 8 ausgebildet. Im Unterschied zu jenen weisen die Zellgehäuseseitenteile 2.1, 2.2 keine gebogenen Abschnitte (2.12, 2.13 oder 2.22 in Fign. 6, 8) auf, sondern entsprechen die Abmessungen (mit Ausnahme der Dicke) der Zellgehäuseseitenteile 2.1, 2.2 denjenigen des Zellgehäuserahmens 2.3. Es sei erwähnt, dass die Erfindung in der Ausgestaltung dieses Ausführungsbeispiels auch funktionsfähig ist, wenn die Zellgehäuseseitenteile 2.1, 2.2 der Zelle 2 gebogene Abschnitte wie in Fign. 6, 8 aufweisen.

Die Wärmeleiteinrichtung 14 ist als ein flacher Kasten mit einem Boden 14.1 und einem schmalen, umlaufenden Rand 14.2 ausgebildet. Dabei bildet der Boden 14.1 eine erste Flachseite der Wärmeleiteinrichtung 14 und bildet der Rand 14.2 vier Schmalseiten der Wärmeleiteinrichtung, während eine freiliegende Kante 14.20 des Randes 14.2 eine zweite, offene Flachseite der Wärmeleiteinrichtung 14 definiert. Die Wärmeleiteinrichtung 14 ist in dem vorliegenden Ausführungsbeispiel als ein Tiefziehteil aus einem Material mit guten elektrischen und thermischen Leitereigenschaften, vorzugsweise aus Aluminium oder Stahl oder einem anderen Metall, hergestellt.

Der Rand 14.2 weist in einem oberen Bereich in der Mitte eine Materialausnehmung 14.3 auf. Die Breite der Materialausnehmung 14.3 entspricht der Breite der Materialerhöhung 2.31 des Zellgehäuserahmens 2.3 der Zelle 2 auf Spiel. Die Innenabmessungen, insbesondere Innenhöhe und Innenbreite der Wärmeleiteinrichtung 14, sind mit geringem Spiel an die Außenabmessungen der Zelle 2 angepasst, sodass die Zelle 2 im Inneren der Wärmeleiteinrichtung 14 Platz findet und ohne Kraft eingesetzt werden kann (vgl. Pfeil "F" in Fig. 11). Wenn sich die Zelle 2 im Betrieb erwärmt und dadurch ausdehnt, kann das Zellgehäuse dann fest an dem Rand 14.2 des Wärmeleitelements 14 anliegen. Die Höhe des Randes 14.2 ist dabei so bemessen, dass dann, wenn die Zelle 2 mit ihrer Zellgehäuseseitenwand 2.2 an dem Boden 14.1 der Wärmeleiteinrichtung 14 anliegt, der Rand 14.2 die andere Zellgehäuseseitenwand 2.1 nicht erreicht.

Die Zelle 2 mit Wärmeleiteinrichtung 14 können ähnlich wie in Fign. 3-5, 9 oder 10 dargestellt zu einem Zellblock bzw. einer Batterie zusammengefasst werden. Dabei wirken die Wärmeleiteinrichtungen 14 einerseits als Kontaktierung zwischen Kontaktabschnitten K1, K3 aufeinander folgender Zellen, andererseits transportieren sie im Inneren der Zellen 2 erzeugte Wärme über die jeweiligen Böden 14.1 nach außen zu den frei liegenden Rändern 14.2, wo die Wärme entweder direkt an eine Kühlplatte abgegeben (unten) oder über Spanneinrichtungen (oben) zu der Kühlplatte geleitet werden kann. Analog den vorstehend beschriebenen Ausführungsbeispielen und -varianten ist für eine elektrische Isolierung zwischen den Wärmeleiteinrichtungen 14 und der Kühlplatte bzw. den Spannbändern (vgl. Bezugsziffern 3, 8 in Fig. 9 u.a.) zu sorgen, um einen Kurzschluss zu vermeiden.

In einer Ausführungsvariante sind die Innenabmessungen der Wärmeleiteinrichtung 14 nicht auf Spiel, sondern mit leichtem Untermaß zu den Außenabmessungen der Zelle 2 dimensioniert, sodass die Wärmeleiteinrichtung 14 und die Zelle 2 mit einer gewissen Kraft zu fügen sind.

Obschon in der Figur nicht näher dargestellt, können Vertiefungen vorgesehen sein, die der Aufnahme und Führung von Spannbändern dienlich sind.

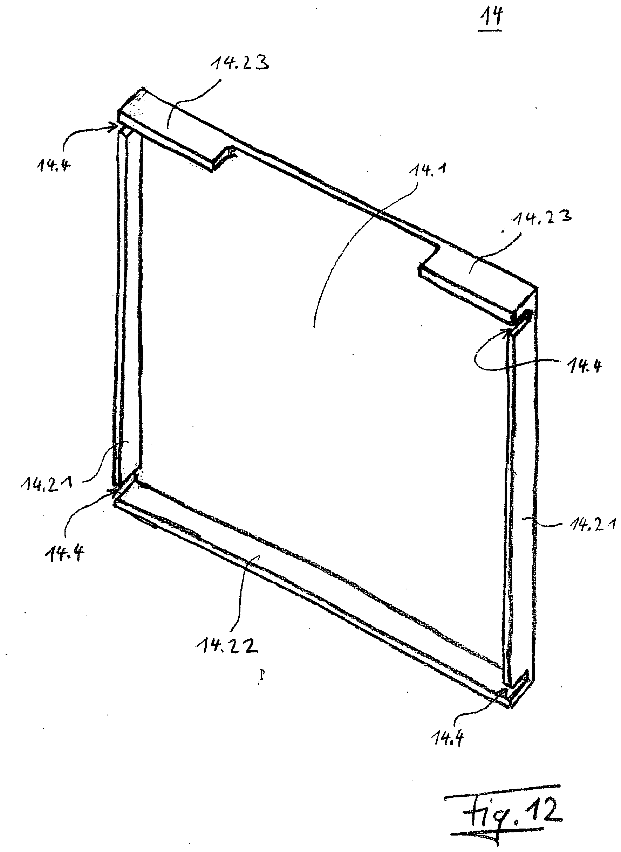

Fig. 12 veranschaulicht in einer schematisierten räumlichen Ansicht eine Abwandlung der Wärmeleiteinrichtung 14 gemäß Fig. 11.

Gemäß der Darstellung in Fig. 12 weist der Rand 14.2 der Wärmeleiteinrichtung an seinen Kanten Unterbrechungen (Einschnitte) 14.4 auf, sodass der durchgehende Rand 14.2 (Fig. 11) in zwei seitliche Randabschnitte 14.21, einen unteren Randabschnitt 14.22 und zwei obere Randabschnitte 14.23 zerfällt. Wenn der Rand mit Untermaß zu der Zelle 2 dimensioniert ist, kann bei dieser Abwandlung die Fügekraft geringer sein, da die Ranabschnitte 14.21, 14.22, 14.23 federnd nachgeben können. Die Wärmeleiteinrichtung 14 kann bei der Herstellung zunächst aus einem planen Blechteil gestanzt oder geschnitten und dann in Form gebogen werden. Alternativ kann die Wärmeleiteinrichtung 14 tiefgezogen und dann ausgeschnitten werden.

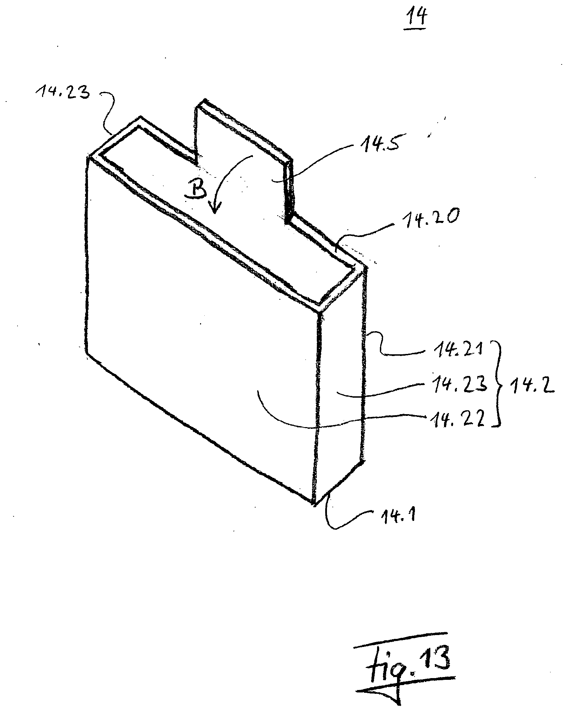

Fig. 13 veranschaulicht als ein weiteres Ausführungsbeispiel eine andere Wärmeleiteinrichtung 14 in einer räumlicher Ansicht. Die Wärmeleiteinrichtung 14 ist als ein flacher Kasten mit einem Boden 14.1 und einem hohen, umlaufenden Rand 14.2 ausgebildet. Dabei weist der Rand 14.2 eine erste Flachseite 14.21, eine zweite Flachseite 14.22 und zwei Schmalseiten 14.23 auf. Die erste Flachseite 14.21 weist eine an ihrem oberen Rand abragende Lasche 14.5 auf. Der Boden bildet eine dritte Schmalseite der Wärmeleiteinrichtung 14, während eine oben liegende, freie Kante 14.20 des Randes 14.2 eine vierte, offene Schmalseite der Wärmeleiteinrichtung 14 definiert.

Die Wärmeleiteinrichtung 14 ist wiederum z. B. als ein Tiefziehteil aus einem Material mit guten elektrischen und thermischen Leitereigenschaften, vorzugsweise aus Aluminium oder Stahl oder einem anderen Metall, hergestellt.

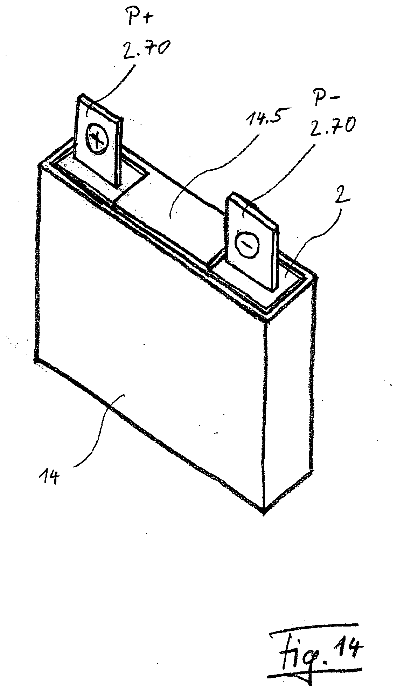

Fig. 14 veranschaulicht eine Wärmeleiteinrichtung 14 gemäß Fig. 13 mit einer darin untergebrachten Batteriezelle 2.

Gemäß der Darstellung in Fig. 14 ist die Zelle 2 als Flachzelle ausgebildet mit einem flachen, eingehausten Elektrodenstapel und zwei von einer Schmalseite der Zelle 2 (hier: der Oberseite) abstehenden Ableitern 2.70, die einen negativen Polanschluss P- und einen positiven Polanschluss P+ der Zelle 2 bilden.

Die in Richtung eines Pfeils "B" in Fig. 13 umgebogene Lasche 14.5 der Wärmeleiteinrichtung 14 liegt auf der Oberseite der Zelle 2. Die Stromableiter 2.70 sind an der offenen Seite der Wärmeleiteinrichtung 14 frei zugänglich. Da die Seiten der Zelle 2 eng an den Wandungen 14.1, 14.21, 14.22, 14.23 der Wärmeleiteinrichtung 14 anliegen, wird im Inneren der Zelle 2 erzeugte Wärme an die Wärmeleiteinrichtung 14 abgegeben.

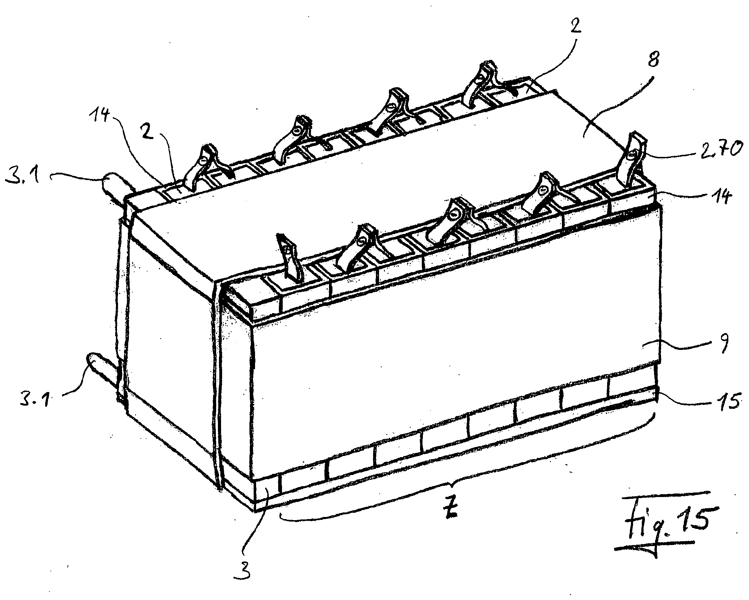

Fig. 15 veranschaulicht in einer räumlichen Darstellung eine Batterie 1 mit mehreren Zellen 2, die in Wärmeleiteinrichtungen 14 gemäß Fig. 13 bzw. 14 untergebracht sind, als ein weiteres Ausführungsbeispiel der vorliegenden Erfindung.

Die in den Wärmeleiteinrichtungen 14 untergebrachten Zellen 2 bilden zusammen einen Zellblock oder Zellverbund Z. Stromableiter 2.7 der Zellen 2 sind im dargestellten Ausführungsbeispiel zu einer Reihenschaltung verbunden.

Bei der Batterie 1 dieses Ausführungsbeispiels ist eine Kühlplatte 3 vorgesehen, die an einer Stirnseite des Zellblocks angeordnet ist. Die Zellen 2 mit Wärmeleiteinrichtungen 14 und die Kühlplatte 3 ruhen auf einer Grundplatte 15. Ein Spannband 9 umgreift den Zellblock Z und die Kühlplatte 3 in einer horizontalen Ebene und wird daher auch als horizontales Spannband 9 bezeichnet. Ein Spannband 8 umgreift den Zellblock Z, die Kühlplatte 3 und die Grundplatte 15 in einer vertikalen Ebene und wird daher auch als vertikales Spannband 8 bezeichnet. Auf diese Weise werden der Zellblock Z, die Kühlplatte 3 und die Grundplatte 15 überkreuz verspannt. Da das horizontale Spannband 9 an den lateralen Schmalseiten der Wärmeleiteinrichtungen 14 anliegt, kann das horizontale Spannband 9 dort Wärme aufnehmen und an die Kühlplatte 3 abgeben. Da das vertikale Spannband 8 an den oberen Schmalseiten und dort auf den umgebogenen Laschen 14.5 der Wärmeleiteinrichtungen 14 aufliegt, kann das vertikale Spannband 8 dort Wärme aufnehmen und an die Kühlplatte 3 abgeben.

Obschon in der Figur nicht näher dargestellt, kann die Kühlplatte 3 Vertiefungen zur Aufnahme des horizontalen Spannbandes 9 aufweisen, die so bemessen sein können, dass das vertikale Spannband 9 plan auf Oberflächen der Kühlplatte 3 und des horizontalen Spannbandes 8 aufliegt. Auch die Wandungen der Wärmeleiteinrichtung 14 können Vertiefungen zur Aufnahme der Spannbänder 8, 9 aufweisen, und die Bodenplatte 15 kann eine Vertiefung zur Aufnahme des vertikalen Spannbandes 8 aufweisen.

In einer Ausführungsvariante ist die Bodenplatte 15 aus einem Wärme leitenden Material hergestellt und trägt zum Wärmetransport und zur Wärmeverteilung innerhalb des Zellblocks Z bei.

In einer alternativen Ausführungsvariante ist die Bodenplatte 15 aus einem Wärme isolierenden Material hergestellt. Das vertikale Spannband 8 kann bei dieser Ausführungsvariante im Inneren der Bodenplatte geführt sein, etwa durch einen horizontal verlaufenden Schlitz.

In einer weiteren Ausführungsvariante ist das vertikale Spannband 8 Teil der Bodenplatte 15 bzw. mit dieser fest verbunden.

In einer weiteren, nicht näher dargestellten Abwandlung ist ein Wärmeleitelement ähnlich dem Wärmeleitelement 14 in Fig. 13 an die Aufnahme einer Flachzelle mit an gegenüberliegenden Schmalseiten angeordneten Stromableitern 2.7 angepasst. Ein solches Wärmeleitelement kann als beidseitig offene Hülse aus einem wärmeleitenden Material ausgebildet sein. Soweit sich die Stromableiter bei einer solchen Zelle über die gesamte Breite der jeweiligen Schmalseiten erstrecken und die Ausbildung von umbiegbaren Laschen (vgl. 14.5 in Fign. 13, 14) zur Wärmeableitung hierüber nicht in Betracht kommt, erfolgt bei einem solchen Wärmeleitelement die Wärmeableitung nur über die geschlossenen Schmalseiten. In einem solchen Fall kann eine weitere Wärmeableitung über die Stromableiter vorgesehen sein.

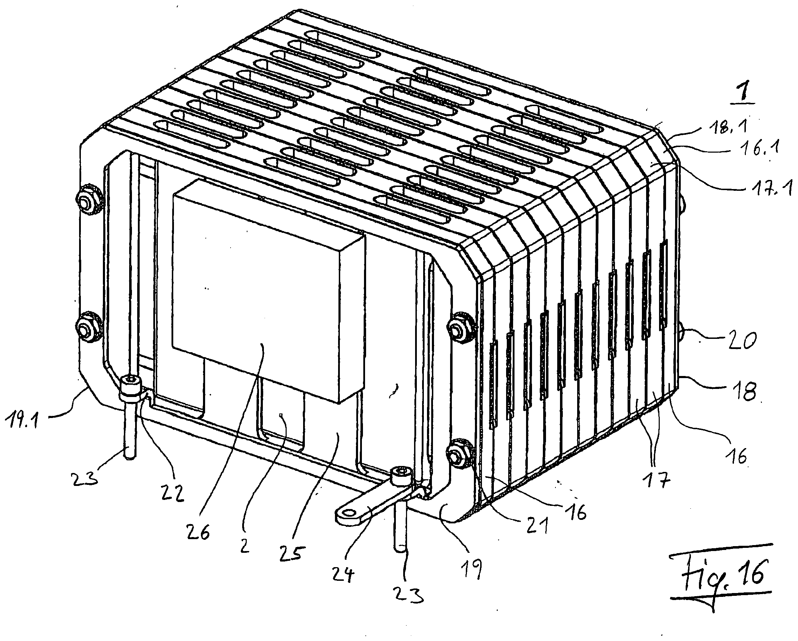

Fig. 16 veranschaulicht in einer räumlichen Darstellung eine Batterie 1 als ein weiteres Ausführungsbeispiel. Gemäß der Darstellung in Fig. 1 sind mehrere Zellen 2 zwischen jeweils zwei Halterahmen 16, 16 oder 16, 17 angeordnet. Die Anordnung aus Zellen 2 und Halterahmen 16, 17 ist zwischen zwei Endplatten 18, 19 angeordnet. Vier Zuganker 20 mit Gegenmuttern 21 sind zur Verspannung des Verbundes aus Zellen, Halterahmen 16, 17 und Endplatten 18, 19 vorgesehen.

Die Endplatten 18, 19 dienen auch als elektrische Pole der Batterie 1. Zum Anschluss sind entsprechende Anschlusseinrichtungen 23, 24 vorgesehen. Ein an Streben 25 angebrachtes Steuergerät 26 ist zur Überwachung von Zustandsparametern der Batterie 1 und der einzelnen Zellen 2, zum Ladungsausgleich und dergleichen vorgesehen. Um einen Kurzschluss zwischen den Endplatten 18, 19 zu vermeiden, sind die Zuganker 20 und/oder Gegenmuttern 21 gegen wenigstens eine der Endplatten 18, 19 elektrisch isoliert.

Bei diesem Ausführungsbeispiel nehmen die Zuganker 20 im Inneren der Batterie 1 erzeugte Wärme auf. Sie befinden sich in Wärme leitendem Kontakt mit den Endplatten 18, 19. Über die Endplatten 18, 19 kann die Wärme mittels einer geeigneten Kühleinrichtung (nicht näher dargestellt) abgeleitet werden.

Als Kühleinrichtung kommt z. B. eine von Luft umströmtes Profil aus Aluminium oder einem anderen guten Wärmeleiter in Betracht, das durch die Zuganker auf der Kopfseite und/oder der Mutterseite mit den Endplatten 18, 19 verschraubt wird. Alternativ kann auch an einer der Endplatten 18, 19 ein Wärmetauscher wie in Fig. 15 stirnseitig angebracht sein, an welchen die Zuganker 20 Wärme abgeben können. Es sind auch noch andere Arten der Wärmeableitung über die Zuganker 20 denkbar.

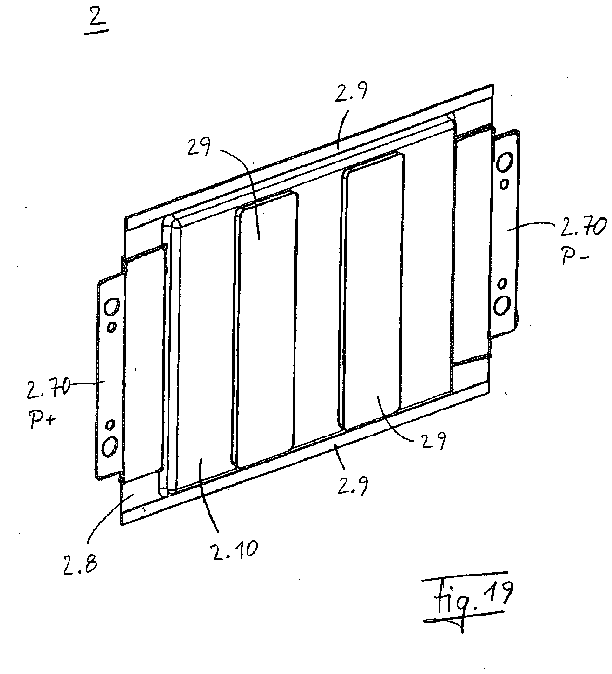

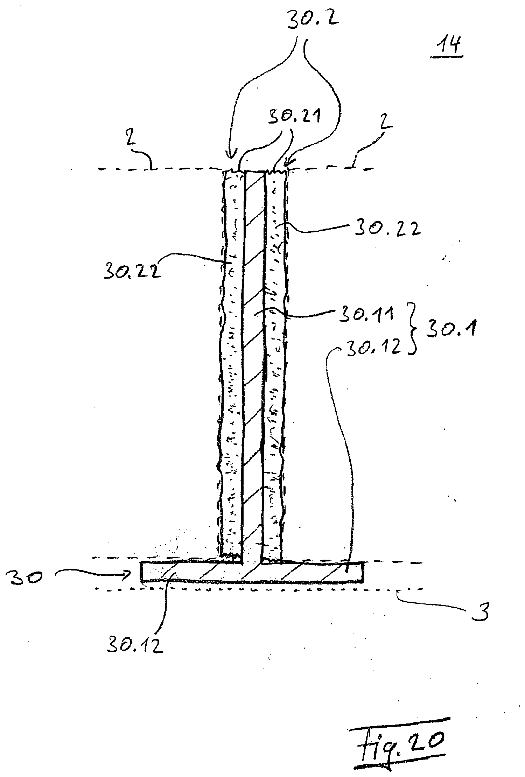

Obschon in der Figur nicht näher dargestellt, sind die Zellen 2 in diesem Ausführungsbeispiel als sogenannte Coffeebag- oder Pouch-Zellen ausgebildet (vgl. auch die in Fig. 19 dargestellte Zelle). Solche Zellen 2 weisen einen Elektrodenstapel und eine Einhausung aus einem Folienmaterial (Hüllfolie) auf, die an einem Randabschnitt versiegelt ist, um eine sog. Siegelnaht zu bilden. Die Ableiter treten dabei an zwei Schmalseiten der Zellen 2 durch die Siegelnaht hindurch. Die Zellen 2 werden von den Halterahmen 16, 17 an den Ableitern selbst oder in Kontaktbereichen, die sich im Bereich der Siegelnaht dort, wo die Ableiter durch die Siegelnaht hindurchtreten, gefasst und geben wenigstens dort über die Ableiter Wärme an die Rahmenelemente 16, 17 ab. Die Zuganker verlaufen durch die Rahmenelemente 16, 17 hindurch und nehmen Wärme von den mit den Ableitern in Kontakt stehenden Halterahmen 16, 17 auf. Alternativ können separate Kontaktelemente vorgesehen sein, die von den Halterahmen 16, 17 gefasst werden und den Anpressdruck auf die Randabschnitte der Zellen 2 ausüben und Wärme von diesen aufnehmen. Weiter alternativ kann Wärme von den Flachseiten der Zellen 2 über Wärmeleitbleche und/oder wärmeleitende elastische Elemente (vgl. Fign. 19, 20), die zwischen den Zellen 2 angeordnet sind, an die Halterahmen 16, 17 übertragen und von diesen wiederum über die Zuganker 20 weiter abgeleitet werden.

In weiteren Ausführungsvarianten können mehr als vier Zuganker, z. B. sechs oder acht Zuganker, vorgesehen sein, um den Zellblock zu verspannen und Wärme abzuleiten.

Alternativ kann auch bei dieser Form eines Zellblocks die Verspannung beispielsweise über wärmeleitende Spannbänder erfolgen (vgl. Fign. 1-5 u.a.). In einer weiteren Ausführungsvariante können solche Spannbänder beispielsweise, aber nicht nur, über Abschrägungen 16.1, 17.1, 18.1, 19.1 der Halterahmen 16, 17 und der Endplatten 18, 19 geführt werden

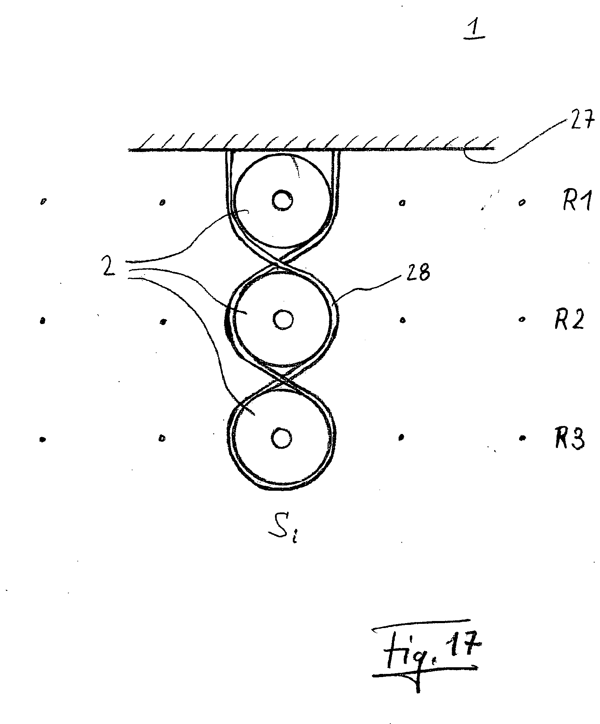

Fig. 17 veranschaulicht als ein weiteres Ausführungsbeispiel den Aufbau einer Batterie 1 in einer schematischen Darstellung.

Die Batterie 1 ist aus einer Mehrzahl von Einzelzellen (Zellen) 2 aufgebaut, die in drei Reihen R1 bis R3 angeordnet sind. Eine erste Reihe R1 ist an eine Batteriegehäusewand 27 angrenzend angeordnet, während die darauf folgenden Reihen jeweils um eine Reihenbreite weiter von der Batteriegehäusewand 27 entfernt angeordnet sind. In der Figur ist aus jeder Reihe R1 bis R3 eine Zelle 2 dargestellt, während die weiteren Zellen der Reihen durch Punkte symbolisiert sind. Quer zur Erstreckungsrichtung der Reihen R1 bis R3 aneinander grenzenden Batteriezellen definieren eine Säule Si von Zellen 2.

Die Zellen 2 der Batterie 1 dieses Ausführungsbeispiels sind zylindrisch ausgebildete Zellen 2. Die Zellen 2 einer Säule Si sind durch ein geschlungenes Befestigungsband 28 an der Batteriegehäusewand 27 befestigt. Das Befestigungsband 28 verläuft von der Batteriegehäusewand 27 und umschlingt die Zellen 2 der Säule Si zunächst wellenförmig bis zur Zelle 2 der entferntesten Reihe R3, umschlingt diese weiter in einer Schlaufe und verläuft sodann zurück zur Batteriegehäusewand 27, wobei es die Zellen 2 der Säule Si in umgekehrter Reihenfolge als zuvor wiederum wellenförmig umschlingt. Auf diese Weise werden die Zellen 2 einer Säule Si in ihrer Position gehalten.

Das Befestigungsband 28 ist aus einem Wärme leitenden Material hergestellt. Durch Umschlingung der Zellen 2 befindet es sich in engem Kontakt mit diesen, nimmt Wärme, welche in den Zellen 2 erzeugt wird, auf und transportiert sie zu der Batteriegehäusewand 27. Die Batteriegehäusewand 27 ist aktiv oder passiv gekühlt bzw. temperiert.

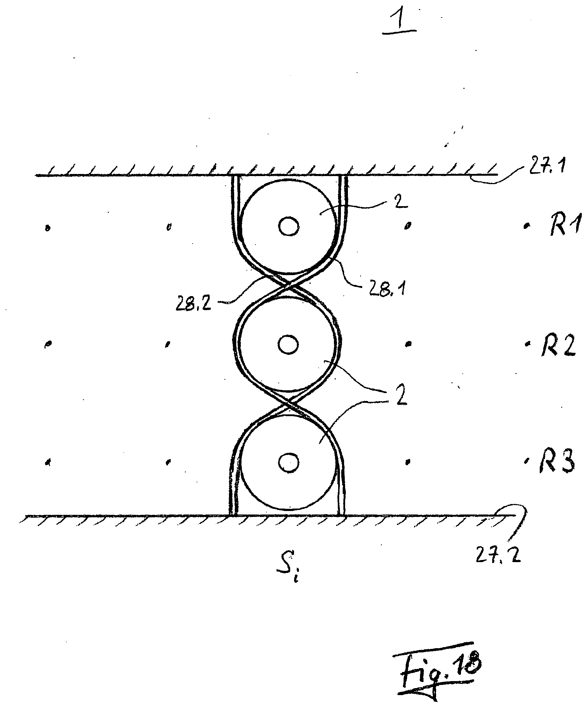

Fig. 18 veranschaulicht als ein weiteres Ausführungsbeispiel den Aufbau einer Batterie 1 in einer schematischen Darstellung. Dieses Ausführungsbeispiel ist eine Abwandlung des in Fig. 17 dargestellten Ausführungsbeispiels. Hier befinden sich die Zelle 2 der drei Reihen R1 bis R3 zwischen zwei Gehäuseseitenwänden 27.1, 27.2. Zwei Befestigungsbänder 28.1, 28.2 verlaufen zwischen den Gehäuseseitenwänden 27.1, 27.2, wobei sie die Batteriezellen 2 wellenförmig umschlingen.

Die Befestigungsbänder 28 bzw. 28.1, 28.1 der in Fign. 17, 18 dargestellten Batterien 1 ist aus einem elastischen, vorzugsweise gut biegsamen Material hergestellt.

Es versteht sich, dass die Erfindung nicht auf eine bestimmte Mehrzahl von Säulen Si ausgerichtet ist; vielmehr ist die Erfindung gemäß den vorstehend beschriebenen Ausführungsbeispielen auch auf Batterien anwendbar, die nur eine Säule S von Batteriezellen 2 aufweist.

Es versteht sich ferner, dass die Erfindung nicht auf drei Reihen R1 bis R3 von Batteriezellen 2 beschränkt ist; vielmehr ist die Erfindung gemäß den vorstehend beschriebenen Ausführungsbeispielen auch auf Batterien anwendbar, die mehr oder weniger Reihen Ri von Batteriezellen 2 aufweist.

Obschon in Fign. 17, 18 von länglichen, zylindrischen Zellen 2 ausgegangen wurde, können in einer Ausführungsvariante an deren Stelle Stapel von flachen zylindrischen Zellen, etwa Knopfzellen oder dergleichen, vorgesehen sein, die durch eine weitere, nicht näher dargestellte Spanneinrichtung in Achsenrichtung aneinander gepresst werden.

Fig. 19 veranschaulicht in einer räumlicher Darstellung den Aufbau einer Batteriezelle 2 als ein weiteres Ausführungsbeispiel. Die Batteriezelle 2 dieses Ausführungsbeispiels ist eine sogenannte Coffeebag- oder Pouchzelle, deren flacher, in etwa quaderförmiger Elektrodenstapel (aktiver Teil) in eine Folie eingeschlagen ist, welche im Randbereich versiegelt ist und eine sogenannte Siegelnaht 2.8 bildet. Stromableiter 2.70 der Zelle 2 erstrecken sich durch die Siegelnaht 2.8 hindurch. Die Stromableiter 2.70 der Zelle 2 sind ohne Beschränkung der Allgemeinheit an gegenüberliegenden Schmalseiten, vorzugsweise den kürzeren Schmalseiten der Zelle 2 angeordnet.

An den Flachseiten der Zelle 2 sind elastische Mittel (Polster) 29 angebracht, z. B. aufgeklebt oder dergleichen. Die Polster 29 dienen der elastischen Abstützung der Zelle 2 gegen andere Zellen oder einen Batteriegehäuserahmen oder ein Rahmenelement und sind geeignet, thermische Ausdehnungen auszugleichen oder Stöße abzufedern. Die Polster 29 weisen gute Wärmeleiteigenschaften auf. Dazu ist beispielsweise ein nachgiebiges, an sich nicht besonders wärmeleitend ausgebildetes Material wie etwa PU-Schaum, Moosgummi oder dergleichen in einer gut wärmeleitenden Hülle (Folie oder dergleichen) angeordnet. Die Hülle ist vorzugsweise selbst dehnbar oder balgartig ausgebildet, um den Bewegungen des nachgiebigen Materials folgen zu können.

In einer Abwandlung weist das nachgiebige Material, das in einer gesonderten Hülle angeordnet sein kann, aber nicht muss, selbst wärmeleitende Eigenschaften auf. Es handelt sich beispielsweise um ein Wärmeleitgel, eine Anordnung von Metallfedern, -spänen oder dergleichen oder einen mit Metallteilen dotierten Schaum.

Aufgrund der wärmeleitenden Eigenschaften der Polster 29 kann ein thermischer Ausgleich zwischen benachbarten Zellen 2 erleichtert werden. Falls zwischen benachbarten Zellen 2 Wärmeleitmittel wie etwa Wärmeleitbleche oder dergleichen angeordnet sind, kann auch eine wirksame Wärmeableitung aus einem Zellverbund aus Zellen 2 verwirklicht werden, ohne im Inneren des Zellverbundes eine aktive Kühlung vorsehen zu müssen. Die Wärmeleitmittel wie etwa Wärmeleitbleiche oder dergleichen können mit einer Kühlplatte oder dergleichen gekoppelt sein, wie es z. B. in Fig. 1 dargestellt ist.

Fig. 20 veranschaulicht in einer Querschnittsansicht den Aufbau einer Wärmeleiteinrichtung 30 als ein weiteres Ausführungsbeispiel. Die Wärmeleiteinrichtung 30 dieses Ausführungsbeispiels weist eine Trägerstruktur 30.1 und eine zwei elastische Schichten 30.2 auf. Die Trägerstruktur 30.1 ist aus einem gut wärmeleitenden Material wie etwa Aluminium oder einem anderen Metall, einem wärmeleitenden Kunststoff oder dergleichen hergestellt. Sie weist im Querschnitt die Form eines T-Profils mit einem langen Schenkel 30.11 und zwei kurzen Schenkeln 30.12 auf. Der lange Schenkel 30.11 ist zur Anordnung zwischen Batteriezellen 2 (als gestrichelte Umrisse 2 dargestellt) eines Zellverbundes vorgesehen, um in den Batteriezellen 2 erzeugte Wärme aufzunehmen. Die kurzen Schenkel 30.12 sind zur Anlage an einer Wärmeleitplatte 3 (als gepunkteter Umriss 3 dargestellt) oder dergleichen vorgesehen, um die von den Batteriezellen 2 aufgenommen Wärme abzugeben.

Auf beiden Seiten des langen Schenkels 30.11 sind elastische Schichten 30.2 angeordnet, z.B. aufgeklebt oder dergleichen. Die elastischen Schichten 30.2 dienen der elastischen Abstützung der Zellen 2 gegeneinander und sind geeignet, thermische Ausdehnungen der Zellen 2 auszugleichen oder Stöße abzufedern. Die elastischen Schichten 30.2 weisen gute Wärmeleiteigenschaften auf. Dazu ist beispielsweise ein nachgiebiges, an sich nicht besonders wärmeleitend ausgebildetes Material wie etwa PU-Schaum, Moosgummi oder dergleichen in einer gut wärmeleitenden Hülle (Folie oder dergleichen) angeordnet. Die Hülle ist vorzugsweise selbst dehnbar oder balgartig ausgebildet, um den Bewegungen des nachgiebigen Materials folgen zu können.

In einer Abwandlung weist das nachgiebige Material, das in einer gesonderten Hülle angeordnet sein kann, aber nicht muss, selbst wärmeleitende Eigenschaften auf. Es handelt sich beispielsweise um eine Wärmeleitgel, eine Anordnung von Metallfedern, -spänen oder dergleichen oder einen mit Metallteilen dotierten Schaum.

Aufgrund der wärmeleitenden Eigenschaften der elastischen Schichten 30.2 kann ein thermischer Ausgleich zwischen benachbarten Zellen 2 erleichtert werden und eine wirksame Wärmeableitung aus einem Zellverbund aus Zellen 2 verwirklicht werden, ohne im Inneren des Zellverbundes eine aktive Kühlung vorsehen zu müssen.

Die elastischen Schichten 30.22 können sich in einer Abwandlung auf die kurzen Schenkel 30.12 erstrecken, um auch eine Abfederung nach unten zu erzielen.

Zwischen den kurzen Schenkeln 30.22 und der Kühlplatte 3 kann eine elektrisch isolierende Wärmeleitfolie oder dergleichen vorgesehen sein.

Obschon die vorliegende Erfindung vorstehend unter Bezugnahme auf konkrete Ausführungsbeispiele in ihren wesentlichen Merkmalen beschrieben wurde, versteht sich, dass die Erfindung nicht auf diese Ausführungsbeispiele beschränkt ist, sondern in dem durch die Patentansprüche vorgegebenen Umfang und Bereich abgewandelt und erweitert werden kann.

So ist die Erfindung keineswegs auf Flach- oder zylindrische Zellen vom Lithium-Ionen-Typ beschränkt, sondern kann in ihrem Grundkonzept auf alle Arten von Energiespeichervorrichtung wie etwa Primär- und Sekundärzellen anderer elektrochemischer Zusammensetzung und Funktion, Brennstoffzellen, Kondensatoren, insbesondere Hochleistungskondensatoren wie etwa Supercaps oder dergleichen, angewendet werden.

Es versteht sich, dass, soweit es technisch möglich ist, Einzelmerkmale jeder der vorstehend beschriebenen und in den Figuren veranschaulichten Ausführungsbeispiele, -varianten und Abwandlungen in jedem anderen der Ausführungsbeispiele, -varianten und Abwandlungen einsetzbar ist.

Eine Batterie 1 oder ein Zellverbund oder Zellblock Z sind Beispiele für eine Energiespeichereinrichtung im Sinne der Erfindung. Zellen 2 sind Beispiele für Speicherzellen im Sinne der Erfindung. Spannbänder 8, 9, Zuganker 20 und Befestigungsbänder 28, 28.1, 28.2 sind Beispiele für eine Spanneinrichtung bzw. für Spannelemente im Sinne der Erfindung. Halterahmen 16, 17 sind Beispiele für Halteelemente im Sinne der Erfindung. Kühlplatten 3 sind Beispiele für eine Wärmetauschereinrichtung im Sinne der Erfindung. Ein Kühlmittel ist ein Wärmeträger im Sinne der Erfindung.

### Liste der Bezugszeichen:

- 1: Batterie
- 2: Zelle
- 2.1: Zellgehäuseseitenwand
- 2.11: Messanschluss
- 2.2: Zellgehäuseseitenwand
- 2.3: Zellgehäuserahmen
- 2.31: Materialerhöhung
- 2.32: obere Schmalseite
- 2.33: Materialrücknahme
- 2.34: Materialrücknahme
- 2.4: Elektrodenstapel
- 2.5: Elektrodenfolie
- 2.6: Separator
- 2.7: Ableitfahne
- 2.70: Polkontakt (Stromableiter)
- 2.8: Siegelnaht
- 2.9: Falz
- 2.10: Flachseite
- 3: Kühlplatte
- 3.1: Kühlmittelanschluss
- 3.2: Vertiefung
- 3.3: Kühlkanal
- 4: Wärmeleitfolie
- 5: Andruckplatte
- 5.1: Vertiefung
- 6: vordere Polplatte
- 7: hintere Polplatte
- 6.1, 7.1: fahnenartige Verlängerung
- 6.2, 7.2: Befestigungsnase
- 7.3: Vertiefung
- 8: Spannelement
- 8.1: Federzone
- 8.20, 8.21, 8.22: Wärmeleitelement
- 8.3: Crimpverschluss
- 8.4: Spannbereich
- 8.5: Beschichtung
- 9: Spannband
- 10: Elektrisches Anschlusselement
- 11: Elektrisches Anschlusselement
- 13: Elektronisches Bauelement
- 13.1: Einrichtung zur Zellspannungsüberwachung
- 13.2: Einrichtung zum Zellspannungsausgleich
- 13.3: Kontaktelement
- 14: Wärmeleitelement
- 14.1: Boden
- 14.2: Rand
- 14.20: Kante
- 14.21, 14,22, 14.23: Randteilstücke
- 14.3: Ausnehmung
- 14.4: Einschnitte
- 14.5: Lasche
- 15: Bodenplatte
- 16, 17: Halterahmen
- 16.1, 17.1: Abschrägung
- 18, 19: Endplatten
- 18.1, 19.1: Abschrägung
- 20: Zuganker
- 21: Mutter
- 22, 23, 24: Anschlusseinrichtung
- 25: Strebe
- 26: Steuergerät
- 27, 27.1, 27.2: Gehäusewand
- 28, 28.1, 28.2: Befestigungsband
- 29: Polster (elastisches Mittel)
- 30: Wärmeleitelement
- 30.1: Trägerstruktur
- 30.11: langer Schenkel
- 30.12: kurze Schenkel
- 30.2: elastische Schicht
- 30.21: nachgiebiges Material
- 30.22: Hülle

- B: Biegerichtung
- E1: Erste Zelle
- E2: Letzte Zelle
- F: Fügerichtung
- b: Breite
- h: Höhe
- K1 bis K3: Spannungs-Anschlusskontakte
- P+: Positiver Pol
- P-: Negativer Pol
- P_{neg}: Negativer Polanschluss
- Pₚₒₛ: Positiver Polanschluss
- t: Tiefe, Dicke
- Z: Zellverbund

Es wird darauf hingewiesen, dass vorstehende Bezugszeichenliste integraler Bestandteil der Beschreibung ist.

## Patentansprüche

1. Energiespeichervorrichtung (1), aufweisend eine Mehrzahl von Speicherzellen (2), eine Spanneinrichtung (8, 9) zum Verspannen der Speicherzellen (2), und eine Temperiereinrichtung zum Temperieren der Speicherzellen (2) oder eines durch die Speicherzellen (2) gebildeten Zellverbundes,
wobei Zellgehäuseseitenwände (2.1, 2.2) der Speicherzellen (2) elektrisch leitend ausgeführt sind und die Pole (P+, P-) der Speicherzellen (2) bilden,
wobei die Spanneinrichtung (8, 9) als funktionaler Bestandteil der Temperiereinrichtung ausgelegt und eingerichtet ist,
**dadurch gekennzeichnet,**
**dass** zwischen zwei Speicherzellen (2) wenigstens ein elastisch nachgiebig und wärmeleitend ausgebildetes Dämpfungselement vorgesehen ist und
**dass** die Spanneinrichtung (8, 9) wenigstens ein erstes Spannband (8), das mit dem wärmeleitenden Material ausgebildet ist, und ein zweites Spannband (9) aufweist, wobei das zweite Spannband (9) derart angeordnet ist, dass es teilweise das erste Spannband (8) überdeckt.

2. Energiespeichervorrichtung (1) nach Anspruch 1, **dadurch gekennzeichnet, dass** die Spanneinrichtung (8, 9) wenigstens abschnittweise, vorzugsweise flächig, an Wärmeaustauschflächen der Speicherzellen (2) anliegt.

3. Energiespeichervorrichtung (1) nach einem der vorstehenden Ansprüche, **dadurch gekennzeichnet, dass** die Speicherzellen (2) eine prismatische, insbesondere flache Form aufweisen und Wärmeaustauschflächen an wenigstens einer von Umfangsseiten, insbesondere Schmalseiten, der Speicherzellen (2) vorgesehen sind.

4. Energiespeichervorrichtung (1) nach einem der vorstehenden Ansprüche, **dadurch gekennzeichnet, dass** Wärmeleitelemente (8.20, 8.21, 8.22) vorgesehen sind, die mit einem wärmeleitenden Material ausgebildet und wenigstens abschnittweise, vorzugsweise flächig, an Wärmeaustauschflächen der Speicherzellen (2) anliegen, wobei die Spanneinrichtung (8, 9) wenigstens an freien Flächen der Wärmeleitelemente (8.20, 8.21, 8.22) anliegt.

5. Energiespeichervorrichtung (1) nach einem der vorstehenden Ansprüche, **dadurch gekennzeichnet, dass** die Spanneinrichtung Halteelemente (16, 17) und Spannelemente aufweist, wobei die Halteelemente (16, 17) im Wechsel mit den Speicherzellen (2) angeordnet sind, um die Speicherzellen (2) zwischen sich zu halten, und wobei die Spannelemente die Halteelemente (16, 17) mit den Speicherzellen (2) verspannen, wobei die Halteelemente (16, 17) wenigstens abschnittweise mit Wärmeaustauschflächen der Speicherzellen(2) thermisch gekoppelt sind, und wobei die Spannelemente wenigstens abschnittweise an Wärmeaustauschflächen der Halteelemente (16, 17) anliegen.

6. Energiespeichervorrichtung (1) nach einem der vorstehenden Ansprüche, **dadurch gekennzeichnet, dass** die Spanneinrichtung wenigstens abschnittweise, insbesondere durch flächigen Kontakt, mit Abschnitten einer Wärmetauschereinrichtung thermisch gekoppelt ist, wobei die Wärmetauschereinrichtung vorzugsweise an einen Wärmeträgerkreislauf angeschlossen ist und wobei der Wärmeträgerkreislauf vorzugsweise steuerbar bzw. regelbar ist.

7. Energiespeichervorrichtung (1) nach Anspruch 6, **dadurch gekennzeichnet, dass** die Wärmetauschereinrichtung wenigstens abschnittweise an Wärmeaustauschflächen der Speicherzellen anliegt, wobei die Speicherzellen eine flache prismatische Form aufweisen und Wärmeaustauschflächen an wenigstens zwei, vorzugsweise gegenüberliegenden Schmalseiten der Speicherzellen vorgesehen sind.

8. Energiespeichervorrichtung (1) nach einem der vorstehenden Ansprüche, **dadurch gekennzeichnet, dass** das wenigstens ein Dämpfungselement Teil einer Speicherzelle oder Teil eines Wärmeleitelements oder an Flächen einer Speicherzelle oder eines Wärmeleitelements angebracht ist oder zwischen Speicherzellen und einem Wärmeleitelement angeordnet ist.

## Claims

1. Energy storage device (1), comprising a plurality of storage cells (2), a clamping device (8, 9) for clamping the storage cells (2) and a tempering device for tempering the storage cells (2) or a cell composite formed by the storage cells (2),
wherein cell housing walls (2.1, 2.2) of the storage cells (2) are designed to be electrically conductive and form the poles (P+, P-) of the storage cells (2),
wherein the clamping device (8, 9) is designed and configured as a functional component of the tempering device,
**characterised in that**
at least one elastically yielding and heat-conducting damping element is provided between two storage cells (2), and
**in that** the clamping device (8, 9) comprises at least one first retaining strap (8) formed from the heat-conducting material and a second retaining strap (9), the second retaining strap (9) being arranged in such a way that it partially covers the first retaining strap (8).

2. Energy storage device (1) according to claim 1, **characterised in that** at least a section of the clamping device (8, 9) is in, preferably surface, contact with heat exchanging surfaces of the storage cells (2).

3. Energy storage device (1) according to any of the preceding claims, **characterised in that** the storage cells (2) have a prismatic, in particular flat, shape, and **in that** heat exchanging surfaces are provided on at least one of the circumferential sides, in particular narrow sides, of the storage cells (2).

4. Energy storage device (1) according to any of the preceding claims, **characterised in that** heat-conducting elements (8.20, 8.21, 8.22) are provided, which are formed from a heat-conducting material and at least a section of which is in, preferably surface, contact with heat exchanging surfaces of the storage cells (2), wherein the clamping device (8, 9) is in contact at least with free surfaces of the heat-conducting elements (8.20, 8.21, 8.22).

5. Energy storage device (1) according to any of the preceding claims, **characterised in that** the clamping device comprises holding elements (16, 17) and clamping elements, wherein the holding elements (16, 17) are arranged to alternate with the storage cells (2) in order to hold the storage cells (2) between them, and wherein the clamping elements clamp the holding elements (16, 17) to the storage cells (2), wherein at least a section of the holding elements (16, 17) is thermally coupled to heat exchanging surfaces of the storage cells (2), and wherein at least a section of the clamping elements is in contact with heat exchanging surfaces of the holding elements (16, 17).

6. Energy storage device (1) according to any of the preceding claims, **characterised in that** at least a section of the clamping device is thermally coupled to sections of a heat exchanger device, in particular by surface contact, wherein the heat exchanger device is preferably connected to a heat transfer circuit and wherein the heat transfer circuit is preferably controllable in an open or closed loop.

7. Energy storage device (1) according to claim 6, **characterised in that** at least a section of the heat exchanger device is in contact with heat exchanging surfaces of the storage cells, wherein the storage cells have a flat prismatic shape and heat exchanging surfaces are provided on at least two, preferably opposite, narrow sides of the storage cells.

8. Energy storage device (1) according to any of the preceding claims, **characterised in that** the at least one damping element is a part of a storage cell or a part of a heat-conducting element, or mounted on surfaces of a storage cell or a heat-conducting element or located between storage cells and a heat-conducting element.

## Revendications

1. Dispositif de stockage d'énergie (1) présentant une pluralité de cellules de stockage (2), un dispositif de serrage (8, 9) destiné à serrer les cellules de stockage (2) et un dispositif de régulation de température destiné à réguler la température des cellules de stockage (5) ou d'un composite de cellules formé par les cellules de stockage (2), les parois latérales (2.1, 2.2) de boîtier des cellules de stockage (2) étant électroconductrices et formant les pôles (P+, P-) des cellules de stockage (2), le dispositif de serrage (8, 9) faisant partie intégrante fonctionnelle du dispositif de régulation de température, **caractérisé en ce qu'**entre deux cellules de stockage (2) est prévu au moins un élément d'amortissement thermoconducteur et élastique et **en ce que** le dispositif de serrage (8, 9) présente au moins une première bande de serrage (8) qui est constituée du matériau thermoconducteur, et une seconde bande de serrage (9), la seconde bande de serrage (9) étant disposée de telle sorte qu'elle recouvre partiellement la première bande de serrage (8).

2. Dispositif de stockage d'énergie (1) selon la revendication 1, **caractérisé en ce que** le dispositif de serrage (8, 9) repose au moins à certains endroits, de préférence à plat, sur des surfaces d'échange de chaleur des cellules de stockage (2).

3. Dispositif de stockage d'énergie (1) selon l'une quelconque des revendications précédentes, **caractérisé en ce que** les cellules de stockage (2) présentent une forme prismatique, notamment plate et des surfaces d'échangeur de chaleur sont prévues sur au moins en particulier un côté étroit des côtés périphériques, des cellules de stockage (2).

4. Dispositif de stockage d'énergie (1) selon l'une quelconque des revendications précédentes, **caractérisé en ce qu'**il est prévu des éléments thermoconducteurs (8.20, 8.21, 8.22) qui sont constitués d'un matériau thermoconducteur et reposent au moins à certains endroits, de préférence à plat, sur des surfaces d'échange de chaleur des cellules de stockage (2), le dispositif de serrage (8, 9) reposant au moins sur des surfaces libres des éléments thermoconducteurs (8.20, 8.21, 8.22).

5. Dispositif de stockage d'énergie (1) selon l'une quelconque des revendications précédentes, **caractérisé en ce que** le dispositif de serrage présente des éléments de retenue (16, 17) et des éléments de serrage, les éléments de retenue (16, 17) étant disposés en alternance avec les cellules de stockage (2) pour retenir les cellules de stockage (2) entre eux et les éléments de serrage assujettissant les éléments de retenue (16, 17) aux cellules de stockage (2), les éléments de retenue (16, 17) étant couplés thermiquement au moins à certains endroits aux surfaces d'échange de chaleur des cellules de stockage (2), et les éléments de serrage reposant au moins à certains endroits sur les surfaces d'échange de chaleur des éléments de retenue (16, 17).

6. Dispositif de stockage d'énergie (1) selon l'une quelconque des revendications précédentes, **caractérisé en ce que** le dispositif de serrage est couplé thermiquement au moins à certains endroits, en particulier par contact plat, à des sections d'un dispositif d'échange de chaleur, le dispositif d'échange de chaleur étant raccordé de préférence à un circuit de caloporteur et le circuit de caloporteur pouvant être de préférence réglable ou commandé.

7. Dispositif de stockage d'énergie (1) selon la revendication 6, **caractérisé en ce que** le dispositif d'échange de chaleur repose au moins à certains endroits sur des surfaces d'échange de chaleur des cellules de stockage, les cellules de stockage présentant une forme prismatique plate et **en ce qu'**il est prévu des surfaces d'échange de chaleur sur au moins deux côtés étroits, de préférence opposés, des cellules de stockage.

8. Dispositif de stockage d'énergie (1) selon l'une quelconque des revendications précédentes, **caractérisé en ce que** l'au moins un élément d'amortissement est appliqué sur une partie d'une cellule de stockage ou une partie d'un élément d'amortissement ou sur des surfaces d'une cellule de stockage ou d'un élément thermoconducteur ou est disposé entre les cellules de stockage et un élément thermoconducteur (10).
